# EUROPEAN PATENT SPECIFICATION

(11) **EP 4 607 426 B1**
(45) Date of publication and mention of the grant of the patent: **07.10.2026**
(21) Application number: 24158866.4
(22) Date of filing: 21.02.2024
(51) Int. Cl.: G06Q 10/087, G06Q 50/02, G09F 3/08, G09F 3/02

(54) **DESTINATION-SPECIFIC PRODUCT LABEL**
ZIELSPEZIFISCHES PRODUKTETIKETT
ÉTIQUETTE DE PRODUIT SPÉCIFIQUE À UNE DESTINATION

(43) Date of publication of application: 27.08.2025
(73) Proprietor: Bayer Aktiengesellschaft, 51373 Leverkusen (DE)
(72) Inventor: RUTS, Tom, 40237 Düsseldorf (DE); DE VULDER, Catherine Marie, 40237 Düsseldorf (DE); VAN DUYN, Samuel, Raleigh, NC 27615 (US); LYKKEGAARD HANSEN, Søren, Copenhagen (DK)
(74) Representative: BIP Patents

(56) References cited:
- US-A1- 2012 183 675
- US-A1- 2014 224 784
- US-A1- 2016 267 608
- "HM-2028 - Glyphosate, free acid", 1 January 2005 (2005-01-01), U.S.A., pages 1 - 44, XP055050785, Retrieved from the Internet <URL:http://www.agrian.com/pdfs/HM-2028_Label.pdf> [retrieved on 20130123]
- ANONYMOUS: "DuPont Velpar DF herbicide", 1 January 2011 (2011-01-01), pages 1 - 27, XP055174429, Retrieved from the Internet <URL:http://www.cdms.net/ldat/ld0BP011.pdf> [retrieved on 20150306]

## Description

### FIELD OF THE DISCLOSURE

This disclosure deals with the use of products which are subject to regulatory approval, such as crop protection products, plant strengtheners, plant growth regulators, biostimulants, and/or soil auxiliary substances. Systems, methods, computer programs, and kits disclosed herein relate to the generation of destination-specific product labels for the application of such products to target areas.

### BACKGROUND

US2016267608A1 discloses a pesticide and crop treatment application label and maximum residue level compliance checking system and method.

The following link takes one to a product label: http://www.agrian.com/pdfs/HM-2028_Label.pdf US2012/183675A1 discloses seed treatment systems and methods.

Crop protection products play a vital role in modern agriculture, contributing to the management of pests, diseases, and weeds that can threaten crop yields and quality. These products encompass a range of pesticides, herbicides, fungicides, and other chemical or biological agents designed to safeguard crops and/or enhance agricultural productivity.

In contemporary agriculture, the use of crop protection products is guided by stringent regulations, evolving scientific research, and a growing emphasis on sustainable and integrated pest management practices. Farmers and agricultural professionals rely on these products to maintain crop health and ensure food security while also prioritizing environmental stewardship and human health.

In many countries, crop protection products must be approved before they can be used. The approval process for crop protection products usually involves rigorous evaluation by regulatory authorities to ensure that these products are safe, effective, and environmentally sustainable.

The process typically includes the following steps:
Product development and testing: Manufacturers develop new crop protection products and conduct extensive research and testing to demonstrate their efficacy, safety, and environmental impact. This includes studies on the product's effectiveness, e.g., in controlling pests, weeds, or diseases, as well as assessments of potential risks to human health and the environment.

Regulatory submission: Once the product development and testing phase is complete, manufacturers submit comprehensive dossiers to regulatory authorities. These dossiers include detailed scientific data on the product's composition, toxicity, environmental fate, and efficacy.

Review and evaluation: Regulatory authorities conduct thorough reviews of the submitted data to assess the safety, efficacy, and environmental impact of the crop protection product. This evaluation involves expert analysis of scientific studies, risk assessments, and consideration of potential benefits and risks associated with the product's use.

Risk assessment: Regulatory authorities perform a risk assessment to determine whether the potential benefits of the crop protection product, such as increased crop yields and/or pest control, outweigh any identified risks to human health, non-target organisms, and the environment.

Labelling: If the product is found to meet regulatory standards, the regulatory authority approves the crop protection product for specific uses and conditions. This approval includes the establishment of usage guidelines, safety precautions, and environmental protection measures, which are communicated through the product label.

Such a regulatory approval is not only required for crop protection products, but also for other products used in agriculture, forestry, pasture management, aquaculture and/or other/additional economic activities, such as plant strengtheners, plant growth regulators, biostimulants, soil auxiliary substances and the like.

A product label is universal, i.e., it applies to every target area (e.g., agricultural field), regardless of the condition of the target area. In other words, the regulations for the application of a crop protection product are the same for all agricultural land, even if the land is in different locations and has different characteristics.

In addition, the product label is static, i.e., it cannot simply be changed. A change to the product label requires a new assessment and approval.

The product label is usually designed to minimize the risk of damage from the application of the product to the target area, even when used under the most adverse conditions. As a result, the potential of a product is often not fully exploited.

### SUMMARY OF THE INVENTION

The present disclosure addresses this and other problems. The present disclosure discloses a destination-specific product label that provides instructions for handling a product tailored to the individual conditions of a target area.

Thus the present disclosure relates to a computer-implemented method of generating a destination-specific product label, the method comprising the steps:
- receiving destination information about a target area where a product is to be applied,
- receiving product information about the product to be applied in the target area, wherein the product is or comprises a crop protection product,
- generating a destination-specific product label for the application of the product in the target area based on the information received,
- outputting the destination-specific product label,

wherein the destination information specifies the target area, and/or specifies an amount of biomass present in the target area, and/or includes topographic and/or topological information about the target area, and/or includes information about soil in the target area, the information about soil comprising one or more of the following: soil type, soil texture, soil pH, organic matter content, nutrient levels, cation exchange capacity, soil structure, water holding capacity, soil drainage characteristics, soil depth, soil temperature, soil moisture, type and/or quantity of living organisms in the soil,
wherein at least part of the destination information is obtained using remote sensing, and wherein at least part of the destination information is spatially resolved information,
wherein the product is subject to a regulatory approval and may only be used after regulatory approval has been granted and for as long as the approval exists and under the conditions and in the target area for which the approval was granted,
wherein the destination-specific product label is or comprises the regulatory approval for the application of the product in the target area, wherein the regulatory approval only applies to the application of the product in the target area,
wherein the target area is or comprises an agricultural field for the cultivation of crops,
wherein the destination-specific product label is a digital product label.

Preferred embodiments of the present disclosure are found in the dependent patent claims, in the present description and in the drawings.

### BRIEF DESCRIPTION OF THE DRAWINGS

Fig. 1 shows an exemplary and schematic embodiment of the computer-implemented method of generating a destination-specific product label in the form of a flow chart.
Fig. 2 shows a schematic example of a destination-specific product label.
Fig. 3 shows an exemplary and schematic computer and network architecture for implementing the present invention.
Fig. 4 shows an exemplary and schematic computer system for carrying out the present invention.

### DETAILED DESCRIPTION

The subject matters of the present disclosure will be more particularly elucidated below, without distinguishing between the subject matters (method, computer system, storage medium, kit). Rather, the elucidations that follow are intended to apply by analogy to all subject matters, irrespective of the context (method, computer system, storage medium, kit) in which they occur.

Where steps are stated in an order in the present description or in the claims, this does not necessarily mean that this disclosure is limited to the order stated. Instead, it is conceivable that the steps are also executed in a different order or else in parallel with one another, the exception being when one step builds on another step, thereby making it imperative that the step building on the previous step be executed next (which will however become clear in the individual case). The stated orders thus constitute preferred embodiments.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

Unless defined otherwise, all technical and scientific terms used herein have the same meaning as commonly understood by one of ordinary skill in the art.

As used herein, the articles "a" and "an" are intended to include one or more items and may be used interchangeably with "one or more" and "at least one." As used in the description and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. The term "A or B" can have the following meanings: "A", "B", "A and B".

The present disclosure relates, *inter alia,* to a destination-specific product label for the application of a product in a target area.

The product is a product subject to a regulatory approval, i.e., it may only be used after regulatory approval has been granted, for as long as the approval exists and/or under the conditions and/or in the areas for which the approval was granted.

Products are typically approved by regulatory agencies or authorities in each country. In the European Union, for instance, the approval of crop protection products falls under the responsibility of the European Food Safety Authority (EFSA) and the European Commission. In the United States, the Environmental Protection Agency (EPA) is responsible for the approval of crop protection products. Each country has its own regulatory body that oversees the approval and regulation of products to ensure their safety and efficacy.

The product may be a crop protection product, a plant strengthener, a plant growth regulator, a biostimulant, a soil auxiliary substance and/or any other product used in agriculture, forestry, pasture management, aquaculture and/or other/additional economic activities. It is also possible that the product contains different substances that have different functions, e.g., a crop protection product as well as nutrients and/or biostimulants. It is also possible that the product contains several substances that fulfil the same task or analogous tasks, e.g., different crop protection products. The product may also contain other substances or be used in combination with other substances that do not require regulatory approval (e.g., fertilizers).

The term "crop protection product" is understood to mean a product that serves to protect crops and/or crop products from harmful organisms and/or prevent the effect thereof, and/or to destroy unwanted plants (e.g., weeds) and/or parts of plants. Examples of crop protection products are herbicides, fungicides, and other pesticides (e.g., insecticides, nematicides, molluscicides and the like).

A "plant strengthener" refers to a product or substance that is used to enhance the overall health, resilience, and/or vigor of plants. These products are designed to improve a plant's ability to withstand environmental stressors, such as drought, disease, and/or pests, and/or to promote better growth and development. Plant strengtheners may contain various compounds, such as natural extracts, vitamins, minerals, or other bioactive substances, aimed at boosting the plant's natural defense mechanisms and metabolic processes.

A "plant growth regulator" is a substance or microorganism-based product that is used to modify and/or control the growth and development of plants. A growth regulator can be natural or synthetic and is often employed to enhance crop yield, improve fruit quality, regulate plant height, stimulate root growth, and/or control flowering. Growth regulators can influence various physiological processes in plants, such as cell division, elongation, and/or differentiation, ultimately impacting the overall growth and development of crops.

A "biostimulant" is a substance or microorganism-based product that, when applied to plants and/or the surrounding soil, promotes growth, health, and/or productivity. Unlike fertilizers, biostimulants do not provide nutrients directly to plants; instead, they work to improve nutrient uptake, stress tolerance, and/or overall plant vigor. Biostimulants can contain various compounds such as seaweed extracts, humic acids, amino acids, and/or beneficial microorganisms, which help to enhance plant resilience, root development, and/or nutrient absorption, leading to improved crop performance and/or yield.

A "soil auxiliary substance" is a product used to improve the physical, chemical, and/or biological properties of soil. These substances are aimed at enhancing soil fertility, soil structure, water retention, and/or overall health to support better plant growth and/or productivity. Soil auxiliary substances may include organic materials such as compost, manure, and/or biochar, as well as inorganic materials like lime, gypsum, and/or certain minerals. Additionally, soil conditioners and amendments like perlite, vermiculite, and peat moss are also considered soil auxiliary substances as they help modify soil properties to create a more favourable environment for plant growth.

The term "crop" is understood to mean a plant which is specifically grown as a useful plant by human intervention. A "crop" refers to any plant that is intentionally grown and cultivated by humans for food, feed, fiber, timber, fragrance, medical, sanitary and/or other economic purposes. These plants are usually specifically selected and managed to produce a yield or harvest, and they can include a wide variety of species such as grains, fruits, vegetables, oilseeds, and fiber crops. Parts of the crop being grown may be suitable for human and/or animal consumption. Ornamental plants and algae also fall under the term "crop". The term "crop" also includes seeds that are sown to allow a crop to grow.

The term "crop" also includes cover crops. A "cover crop" is a plant that is planted primarily to manage soil erosion, fertility, quality, water, weeds, pests, diseases, biodiversity, and/or wildlife. Cover crops are usually not grown for direct harvest but are instead used to benefit the soil and/or subsequent crops. They are typically planted during off-season periods and/or in between regular crop plantings. Cover crops can help prevent soil erosion, improve soil health, increase organic matter, suppress weeds, and/or reduce the need for synthetic fertilizers and/or pesticides. Additionally, they can enhance biodiversity, provide habitat for beneficial insects, and/or contribute to overall sustainable agricultural practices. Common cover crops include legumes like clover and vetch, grasses like rye and oats, and various other species depending on the specific agricultural goals and/or local conditions.

The term "product label" as it is used herein refers to information on the permitted (i.e., authorized, approved) use of a product.

The product label is the prerequisite for the product to be used. The product may not (i.e., must not) be used without such a product label.

A prior art product label (i.e., a traditional/classic/conventional product label) is usually a document that is attached to the packaging of the product and/or accompanies the product and serves as an important source of information for users. A product label within the meaning of the present disclosure can also be in digital form (further details are described below).

A product label usually provides the name of the product.

A product label usually provides the name and/or address (or any other/further contact information) of the product manufacturer and/or distributor.

A product label usually lists active ingredient(s) contained in the product.

A product label outlines the approved uses and/or application rates for the product and/or application time and/or application restrictions and/or other limitations.

A product label may specify the crops and/or pests for which the product is intended.

Prescribed and/or recommended application methods and times may be indicated on/by the product label.

A product label may include safety information, such as personal protective equipment (PPE) requirements, handling instructions, first aid measures, and/or environmental precautions (e.g., maintaining buffer zones and/or distances from field boundaries). It also may provide guidance on safe storage and/or disposal of the product.

A product label may include details about environmental hazards, disposal regulations, and/or any specific regulatory requirements and/or restrictions associated with product's use.

A product label may include signal words (such as "Danger" or "Caution") and/or hazard symbols to convey the level of risk associated with the product.

The product label of the present disclosure is a destination-specific product label.

The term "destination-specific product label" means that information about a specific area was considered when the product label was generated, and the authorization (regulatory approval) only applies to the application of the product in a specific area. The specific area is the target area in which the product is to be used.

The term "target area" (also referred to as "destination") refers to a part of the Earth's surface (including the plants growing there) to which the product is to be applied.

Product application is usually carried out outdoors.

The target area can be an agricultural field, for example. The term "agricultural field" (briefly referred to as "field") is understood to mean a spatially delimitable region of the surface of the Earth under agricultural cultivation. Such a field is usually planted with crops that may be supplied with nutrients and/or harvested.

The target area can be an area or multiple areas in an agricultural field. If a target area refers to several (multiple) areas, these generally have identical or comparable properties. "Identical or comparable properties" means that the product labels generated for the different areas have the same conditions of use.

The target area can be a water body, e.g., used for aquaculture, or a part of it.

The target area can be a tree plantation, a forest, a park, a garden, range land, pastureland, and/or a part of it.

The target area can be between 1 cm² and several thousand hectares in size.

It is possible that the size of a target area is determined by the spatial resolution of a sensor used to determine the properties in/of the target area. Many modern commercial Earth observation satellites are capable of capturing images with resolutions ranging from less than 1 meter to several meters per pixel. Some advanced satellites can even achieve sub-meter resolutions, providing highly detailed imagery of the Earth's surface.

The higher the spatial resolution of methods/sensors used to determine properties for and/or in an area, the smaller the target areas can be selected.

It is also possible that the size of a target area is determined by the local accuracy with which the product can be applied in the target area (e.g., with the application means available to the user/farmer).

If a boom sprayer with a boom width of several meters is used to apply the product, the local accuracy with which the product can be applied with such a boom sprayer is usually lower than with a drone that applies the product from a single nozzle at a height of one meter.

The higher the spatial accuracy of the methods/devices for applying the product, the smaller the target areas can be selected.

The target area can specify a surface or a volume.

The target area can refer to plants that grow in a specific area of the Earth's surface. It is possible that the destination-specific product label contains an indication of how much of a product may or should be sprayed per biomass present. In such a case, the target area may refer to the biomass present.

In case of soil auxiliary substances, the target area usually specifies a soil.

A destination-specific product label may be generated for a single target area or for several (different) target areas. It is possible, for example, that the destination-specific product label applies to the application of a product in an agricultural field, but that different conditions of use of the product apply to different areas (target areas) of the agricultural field. "Conditions of use" are any and all rules and/or regulations and/or recommendations and/or prohibitions in connection with the use of the product.

In an embodiment of the present disclosure, the target area is one contiguous area or consists of several contiguous sub-areas with identical or comparable properties, and the destination-specific product label applies exclusively to the one target area. So, if a destination-specific product label is to be generated for a field, it is possible that the field has different areas for which different destination-specific product labels are generated.

In another embodiment of the present disclosure, a destination-specific product label refers to different target areas for which different conditions of use apply. So, if a destination-specific product label is to be generated for a field, it is possible that the field has different areas, but one destination-specific product label is generated for the whole field that contains different conditions of use for different areas of the field.

Preferably, the destination-specific product label is generated for a target area, wherein the target area may have different sub-areas with different characteristics that result in the destination-specific product label containing different information (e.g., recommendations, instructions, and/or prohibitions) for the different sub-areas. In a preferred embodiment, a user indicates for which target area the user wishes to generate a destination-specific product label, and the computer system of the present disclosure generates the destination-specific product label for the target area defined by the user, wherein the computer system of the present disclosure takes into account differences in sub-areas of the target area when generating the destination-specific product label, wherein different rules for the application of the product may apply to the different areas.

The process of generating a destination-specific product label may be initiated by a farmer who provides the information or takes action to ensure that the required information is provided. However, it does not necessarily have to be a farmer who initiates the generation of a destination-specific product label; it can also be another person or several persons. In this disclosure, the term "user" is used for one or more persons who initiate and/or carry out the process of generating a destination-specific product label.

The information used to generate the destination-specific product label may be entered into the computer system of the present disclosure by one or more users, and/or read from one or more databases, and/or transmitted to the computer system of the present disclosure by one or more sensors, and/or transmitted to the computer system of the present disclosure by one or more separate computer systems.

The term "receiving" is used in the present disclosure for all these ways of providing information, because the information is received by the computer system of the present disclosure (regardless of who provides and/or uses the computer system of the present disclosure).

The generation of a destination-specific product label is based on destination information, and product information. The generation of a destination-specific product label can be based on additional information.

"Product information" is information about the product that can and/or should be applied to the target area to protect crops and/or increase crop yield and/or increase crop quality and/or combat pests and/or for other reasons.

As described above, the product can consist of several products that are applied together and/or sequentially.

Product information makes it possible to clearly specify the product(s). Product information may contain a name and/or a code (e.g., an alphanumeric code) that has been assigned to the product(s). Such information that makes it possible to identify a product is also referred to in this description as a "product identifier".

Product information may contain a link (e.g., a URL (uniform resource locator)) where information about the product(s) is stored and can be retrieved.

Product information may contain information on the composition of the product(s), e.g., on active and/or inactive ingredients contained. Product information may contain information on the quantities (e.g., concentrations) of ingredients (e.g., active ingredients) of product(s).

Product information may also contain safety instructions for handling the product(s). Product information may contain information on the properties of the product(s) and/or its components, such as toxicity, composition (e.g., solid, liquid, gas, suspension, mixture, etc.) and/or the like.

Product information is usually provided by the manufacturer of the product(s) (e.g., in the form of a leaflet accompanying the product(s) and/or via a website and/or other means).

Product information can also be or include a prior art product label (i.e., a traditional/classic/conventional product label).

Product information may be manually entered into the computer system of the present disclosure by a user. The term "enter" is also understood to mean selecting an item from a menu and/or clicking a tick box.

In an embodiment of the present disclosure, an optically or electronically readable code attached to a container containing the product is used to enter product information into the computer system.

Such an optically readable code can be, for example, a barcode or a matrix code (e.g., a data matrix code or a QR (quick response) code) that is printed on the container and/or on an instruction leaflet of the product. Such an optically readable code can be detected and interpreted (read out) using a laser scanner and/or a camera, for example.

Such an electronically readable code can, for example, be a radio label (e.g., RFID (radio frequency identification) label) that is attached (e.g., glued) to the container. Such an optically readable code can be read out using a reading device (e.g., RFID reader).

It is possible that a user of the computer system of the present disclosure is prompted by the computer system to specify the product (i.e., enter a product identifier). The user may manually enter the product identifier and/or use the optically and/or electronically readable code to specify the product. The computer system of the present disclosure may be configured to retrieve further product information, such as from a database, based on the product information provided by the user. The database may be a component of the computer system or may be connected to the computer system via a network (e.g., the Internet). It is possible that there are several databases with product information.

The computer system can be configured to obtain all the product information required to generate the destination-specific product label based on the product information (e.g., a product identifier) provided by the user.

However, it is also possible that a user merely provides crop information and/or pest information and that the computer system is configured to identify a (suitable) product for the specified crop and/or pest and to obtain the necessary product information based on the information provided by the user about the crop/pest.

It is also possible that the computer system of the present disclosure is configured such that a user provides information about a target area and optionally further information, and the computer system suggests to the user various products that the user (or another person) can apply to the target area. For each suggested product, the computer system may generate and output a destination-specific product label that provides the user with information about the use of the particular product in the target area.

The generation of a destination-specific product label is based on destination information.

"Destination information" specifies the target area in which the product is to be used.

Destination information may include geocoordinates that indicate where the target area is located. Such geocoordinates may indicate at least one point in the target area or at the edge of the target area. Such geocoordinates may specify field boundaries, i.e., the boundaries that separate an agricultural field from its surroundings. Preferably, the destination information indicates where the target area begins and where it ends (target area boundaries), using geocoordinates, for example.

Destination information may specify the amount of biomass present in the target area. Destination information may indicate the amount of biomass of a specific plant (e.g., a crop and/or a weed) present in the target area.

Destination information may include information that has a direct or indirect influence on the distribution, spread, degradation and/or movement of the product to/from the target area where the product is to be applied.

Destination information may include topographic information about the target area.

"Topographic information" refers to data related to the physical and natural features of the target area's surface. This includes details about the elevation, slope, aspect, and contours of the terrain. Topographic information is crucial for understanding the landscape's characteristics, drainage patterns, and/or soil properties, which are essential for various agricultural applications such as land suitability assessment, precision farming, and/or irrigation planning. This data helps farmers and land managers make informed decisions about crop selection, water management, and/or land use planning based on the physical attributes of the terrain.

Destination information may include topological information about the target area.

"Topological information" refers to data related to the spatial relationships and connectivity of features in the target area. This includes information about the arrangement, adjacency, and/or connectivity of agricultural fields, water bodies, infrastructure, and/or other landscape elements. Topological information can be crucial for tasks such as irrigation system design, crop management, and/or environmental impact assessment. It helps in understanding how different elements within the agricultural landscape are spatially related to one another, which is important for making informed decisions related to sustainable agricultural practices.

Destination information may include information about the type of soil in the target area.

"Soil types" may be classified based on their physical and chemical properties, which significantly influence their suitability for different crops and agricultural practices. Some of the primary soil types include: sandy soil, clay soil, loamy soil, silt soil, peaty soil, chalky soil, silty clay soil.

"Sandy soil" has a high proportion of sand particles and is characterized by good drainage and aeration. However, it tends to have low nutrient retention and water-holding capacity. Sandy soils are often wellsuited for crops that prefer drier conditions, and they may require more frequent irrigation and fertilization.

"Clay soil" contains a high percentage of clay particles and has excellent nutrient retention but can be prone to compaction and poor drainage. It has high water-holding capacity but may be slow to warm up in spring. Clay soils are suitable for certain crops but may require careful management to address drainage and aeration issues.

"Loamy soil" consists of a balanced mixture of sand, silt, and clay particles, offering good drainage, nutrient retention, and favorable soil structure. It is often considered ideal for agriculture, as it provides a good balance of water retention and aeration, making it suitable for a wide range of crops.

"Silt soil" contains a high proportion of fine silt particles and is known for its ability to retain moisture and nutrients. It has good fertility and tilth, but it can be prone to compaction. Silt soils are suitable for growing various crops but may require management practices to address compaction issues.

"Peaty soil" is rich in organic matter and is characterized by high water retention and acidity. It is commonly found in wetland areas and may require special management practices for agricultural use.

"Chalky soil" contains a high proportion of calcium carbonate and can be alkaline in nature. It tends to drain well but may have limitations in nutrient availability for certain crops.

"Silty clay soil" is a mixture of clay and silt particles, offering good fertility and water retention but may require management to address compaction and drainage issues.

There may be subtypes based on specific combinations of sand, silt, and clay, as well as variations in organic matter content, pH, and other factors.

Destination information may include further information about the soil in the target area, such as soil texture, pH, organic matter content, nutrient levels, cation exchange capacity, soil structure, water holding capacity, soil drainage characteristics, soil depth.

"Soil texture" refers to the relative proportions of sand, silt, and clay particles in the soil. The texture influences water retention, drainage, aeration, and the ease of root penetration. Soils are classified as sandy, loamy, or clayey based on their texture.

"Soil pH" indicates the acidity or alkalinity of the soil. It influences nutrient availability and microbial activity. Different crops have specific pH requirements, and soil pH can be adjusted through the application of soil amendments.

"Organic matter content" refers to the amount of organic matter in the soil and affects its fertility, structure, water retention, and nutrient availability. Organic matter contributes to soil health and supports beneficial microbial activity.

"Soil nutrient levels", including nitrogen, phosphorus, potassium, and other essential elements, are critical for plant growth.

"Cation exchange capacity" measures the soil's ability to retain and exchange cations (positively charged ions) such as calcium, magnesium, and potassium. It influences nutrient retention and availability for plants.

"Soil structure" refers to the arrangement of soil particles into aggregates or clumps. Good soil structure promotes root growth, water infiltration, and air movement within the soil.

"Water holding capacity" indicates the soil's ability to retain water for plant use. It is influenced by soil texture, organic matter content, and soil structure.

"Soil drainage characteristics" determine how well excess water moves through the soil. Proper drainage is essential for preventing waterlogging and ensuring adequate aeration for plant roots.

"Soil depth": The depth of the soil profile influences root development and water/nutrient availability for plants. Shallow soils may have limitations for certain crops.

Information about the soil may also include information about the type and/or quantity of living organisms (e.g., worms and/or microorganisms and/or fungi) in the soil.

Information on the soil can be obtained from soil samples, for example. Soil samples can be analysed in a laboratory and/or on site to determine the soil type and properties (see, e.g., Guidelines for soil description, 4th ed., Food and Agriculture Organization of the United Nations, Rome 2006, ISBN 92-5-105521-1).

Information on the soil can also be obtained from one or more sensors located in the target area, such as soil moisture sensors, soil nutrient sensors, soil pH sensors, soil salinity sensors, soil temperature sensors and/or other/further sensors.

Destination information may include static and dynamic information. Static information is information that does not change significantly over the course of a growing season. Static information includes, for example, the soil type. Dynamic information is information that changes significantly over the course of a growing season. Dynamic information includes, for example, biomass, soil temperature and soil moisture.

"Soil moisture" refers to the amount of water present in the soil, typically measured as a percentage of the soil's weight. Soil moisture is a critical factor that directly influences plant growth, plant development, and overall agricultural productivity. Soil moisture measurement can be based on *in situ* probes (sensors) or remote sensing methods (e.g., satellites and/or drones).

"Soil temperature" refers to the measure of the thermal energy present in the soil. It is a crucial factor that directly impacts seed germination, root development, nutrient availability, microbial activity, and overall plant growth. Soil temperature varies with depth, time of year, geographic location, and local environmental conditions. It is influenced by factors such as solar radiation, air temperature, soil moisture, and soil type.

Dynamic information is preferably captured with the aid of sensors, which can be located in or above the target area.

Static and/or dynamic destination information may be obtained using remote sensing.

"Remote sensing" refers to the use of various technologies, such as satellites, drones, and/or aircraft, to collect information about the Earth's surface without direct physical contact.

Remote sensing can assess the health and vigor of crops by measuring factors such as chlorophyll content, leaf area index, and biomass, which can indicate plant stress, nutrient deficiencies, or disease.

Remote sensing can track the growth stages of crops, providing insights into development, maturity, and potential yield estimates. Remote sensing data can contribute to yield prediction models by monitoring crop conditions and growth patterns.

Remote sensing can estimate soil moisture levels, helping farmers optimize irrigation practices and water management. Remote sensing can help identify areas of water stress in crops, allowing for targeted irrigation strategies.

Remote sensing can provide detailed information about the types of crops being grown, as well as changes in land use patterns over time.

Remote sensing can identify areas of potential pest and/or disease infestation by detecting changes in plant reflectance and health indicators.

Remote sensing can assess environmental factors such as erosion, deforestation, and habitat loss.

Destination information is typically provided by the user of the computer system of the present disclosure. The user may enter the information into the computer system of the present disclosure. However, it is also possible for the destination information to be captured by one or more sensors (e.g., local sensors and/or remote sensing) and automatically transmitted to the computer system of the present disclosure.

One or more sensors may be present in the target area that measure destination information such as soil temperature, air temperature, soil moisture, humidity, air pressure and/or the like and transmit the measured values to the computer system of the present disclosure (e.g., via a network) at defined times and/or upon defined events. Air pressure, air temperature and humidity can, for example, be recorded at a defined distance from the ground (e.g., 1 meter).

Destination information may also be collected by satellites and/or drones and/or airplanes and/or robots and/or sensors on agricultural machinery moving through the target area.

Destination information may be obtained from one or more databases, such as the Soil Survey Geographic Database (SSURGO).

Destination information can be mean values (e.g., arithmetic mean values) that are averaged over the target area. Destination information can also be spatially resolved information in which individual subareas are assigned information that characterizes these sub-areas.

It is also possible that a target area is characterized by the predominant, i.e., most frequently occurring, destination information. For example, if more than 50% of the soil in the target area is a soil of a certain soil type, it is possible that the target area is characterized by this soil type.

It is also possible that a target area is characterized by the destination information that causes the greatest restrictions for the application of the product in the target area. If, for example, there are two sub-areas that differ in the destination information, and if a higher application rate is permitted in the first sub-area of the two sub-areas than in the second sub-area due to the respective destination information, it is possible that it is assumed for the target area that the entire target area is characterized by the destination information of the second sub-area.

Destination information can be average values over a certain period of time (e.g., one day or one week or one month or one quarter or half a year or one year or several years). Destination information can also contain time-resolved values. Destination information can also contain maximum and/or minimum values (e.g., daily maximum temperature and/or daily minimum temperature).

The generation of a destination-specific product label may be based on environmental information. "Environmental information" is information that specifies/characterizes the surroundings of the target area.

Environmental information may indicate whether there is a body of water near the target area and/or how far the target area is from the body of water. Environmental information can indicate what type of water body it is.

Environmental information may indicate whether there is a nature reserve and/or a groundwater protection area in the vicinity of the target area and/or how far the target area is from the nature reserve and/or groundwater protection area.

Environmental information may indicate what vegetation is present in the vicinity of the target area.

Environmental information may indicate whether there are roads and/or inhabited areas in the vicinity of the target area and/or how far the target area is from roads and/or inhabited areas.

Environmental information may indicate which soil types are adjacent to the target area and/or which properties the adjacent soil has.

Environmental information may indicate whether animals are kept and/or present in the vicinity of the target area and/or at what distance from the target area. Environmental information can also indicate what type of animals are involved.

Environmental information may include protection goal information, wherein the protection goal information comprises minimum, maximum, and/or preferred thresholds, boundaries, limitations, restrictions required by a regulatory authority to protect humans, animals, non-target organism, and/or the environment.

Environmental information may include neighbouring farm information, wherein the neighbouring farm information comprises information on one or more products applied to neighbouring areas and/or farming practices used in neighbouring areas.

Environmental information can also be any information that can also be collected for the target area, such as topology, topography, weather, climate, vegetation, etc.

The generation of a destination-specific product label may be based on crop information.

"Crop information" specifies the crop that was, is, or will be grown in the target area.

Crop information may include information on the plant species and/or the plant variety. Crop information may include information on whether and/or how the crop has been genetically modified. Crop information may include information about the stage of development of the crop and/or when it was planted or sown and/or whether and/or when it was fertilized and/or whether and/or when it was irrigated.

Crop information may specify the seed sown or to be sown on the target area.

Crop information may include information on whether the crop has already been treated with one or more products and/or with which product(s) the crop has been treated and/or when it has been treated with one or more products and/or how it has been treated with one or more product(s).

Crop information may include information about which crops were previously grown in the target area. It is possible, for example, that a crop rotation was carried out in the target area. "Crop rotation" refers to the practice of systematically planting different crops in the same target area over a sequence of growing seasons. This method involves alternating the types of crops grown in a specific field to achieve various agronomic, economic, and/or environmental benefits. Crop rotation aims to improve soil health, manage pests and/or diseases, and/or optimize nutrient utilization. By rotating crops, farmers can disrupt pest and/or disease cycles, reduce soil erosion, enhance soil fertility, and/or minimize the need for chemical inputs such as fertilizers and/or pesticides. Additionally, crop rotation can contribute to sustainable agricultural practices by promoting biodiversity and/or reducing the risk of soil depletion.

Crop information may be provided by the user of the computer system of the present disclosure, for example by entering the information into the computer system.

Here, too, it is possible that an optically or electronically readable code is present (e.g., on a container in which seed for the crop is/was contained), with the help of which the user can enter information about the crop into the computer system.

The computer system may be configured to obtain additional crop information based on the information provided by the user, for example by reading the additional crop information from one or more databases, which may be components of the computer system of the present disclosure or may be connected to the computer system via a network.

It is also possible that the product is only intended/suitable for the treatment of a specific crop and that the crop is already specified by the product / the product information.

Crop information may also be identified and/or collected by sensors/monitoring devices (e.g., remote sensing via satellite, drones, airplanes).

Crop information may include information on the amount of biomass present in the target area.

Crop information may include a vegetation index, for example. "Vegetation indices" are numerical measures usually derived from remote sensing data that help to quantify various aspects of vegetation health, density, and physiological condition. These indices are often calculated using the spectral reflectance properties of vegetation, typically obtained through satellite or aerial imagery. Vegetation indices provide information about plant growth, health, and overall vitality. Common vegetation indices include the Normalized Difference Vegetation Index (NDVI), which is widely used to monitor plant health and assess vegetation coverage. Another important index is the Enhanced Vegetation Index (EVI), which provides improved sensitivity in high biomass regions and better performance in areas with varying atmospheric conditions. Additionally, the Soil-Adjusted Vegetation Index (SAVI) is used to minimize the influence of soil brightness in the assessment of vegetation cover.

The information used to generate the destination-specific product label may contain application information.

"Application information" is any information that specifies one or more (planned) applications of the product in the target area.

The application information must be distinguished from the instructions for use and/or recommendations for use and/or prohibitions of use, which may be part of the destination-specific product label. Application information is information about the use of the product in the target area that is already known and/or planned before the time of generating the destination-specific product label. Based on the application information (and further information), a destination-specific product label is then generated, which takes into account the application information and may indicate which (additional) conditions of use apply.

Application information may indicate which application means are available and/or how they can be used. The application information may indicate what type(s) of spraying device(s) (e.g., drone, robot, boom sprayer) is/are available, what spray width the spraying device(s) has/have, how many nozzles are available, what types of nozzles are available, and other/further specifications.

Application information may specify a time period (e.g., one day or several days in a row or a period within a day) or several time periods in the future for which an application of the product in the target area is planned.

Application information may indicate how the product is intended to be used. For example, the application information may indicate where the product is intended to be applied (e.g., foliar application or root application or seed coating or soil treatment).

Application information may be provided by the user of the computer system of the present disclosure. The user may enter the information into the computer system of the present disclosure. However, it is also possible that the computer system is configured to read application information from one or more databases, which may be components of the computer system, or which may be connected to the computer system via a network, based on information entered into the computer system by the user. It is possible, for example, that the user specifies an application device (e.g., a spraying device) that is available to him/her for an application of the product in the target area and the computer system uses the information provided by the user to determine application information associated with the application device from one or more databases (e.g., a database provided by the manufacturer of the application device).

Application information may also be provided by an application device (e.g., a spraying device) via an interface of the application device.

The information used to generate the destination-specific product label may contain weather information.

"Weather information" refers to data and/or forecasts related to atmospheric conditions, including temperature, precipitation, humidity, wind speed and direction, solar radiation, and other meteorological parameters in the target area.

Weather information preferably refers to a day or another time period in the future for which the application of the product is planned.

Weather information may be obtained from various sources, including government meteorological agencies, private weather services, and/or localized weather stations.

Weather information may be obtained using one or more sensors in the target area, such as temperature sensors, humidity sensors, sensors for determining the amount of precipitation, anemometers, air pressure meters, radiation sensors and/or other/further sensors.

Exactly which data is used to generate the destination-specific product label and must therefore be provided depends on the model(s) used to generate the destination-specific product label.

It is possible that not all of the information/data required by a model to generate the destination-specific product label necessarily needs to be provided by the user. It is possible that the computer system of the present disclosure is configured to use default values for information/data that a user does not or cannot provide. Such default values may, for example, be defined/specified by regulatory authorities. Such default values may assume, for example, the worst-case scenario.

The information provided by the user and/or read from databases and/or transmitted by sensors and/or other devices and/or default values are used in a further step to generate the destination-specific product label.

The destination-specific product label is generated automatically on the basis of the information received. "Automatically" means without further human intervention.

The generation of the destination-specific product label is based on one or more models.

A "model" is a simplified representation or abstraction of a real-world system, process, or phenomenon. Models are designed to simulate, describe, or predict the behaviour and interactions of complex systems based on a set of assumptions, principles, and input data.

The one or more models may calculate the effects of the product based on the information received when the product is used in the target area. In a further step, instructions, recommendations and/or prohibitions for the use of the product in the target area can be derived from these effects and included in the destination-specific product label.

It is also possible that the one or more models determine instructions, recommendations and/or prohibitions for the use of the product directly on the basis of the information received and include them in the destination-specific product label.

In one embodiment of the present disclosure, a plurality of models are provided to determine various effects of the product when the product is applied to the target area. The determined effects are then used by one or more further models to determine regulations, recommendations and/or prohibitions for the application of the product to the target area.

A model can also include several sub-models.

For the sake of readability, it is assumed below that there is only one model.

The model can be a data-driven model, such as a machine learning model. A "machine learning model" is a computational algorithm or mathematical framework that learns patterns and relationships from data, enabling it to make predictions, identify trends, or perform tasks without being explicitly programmed to do so. A machine learning model is trained on training data to produce specific output data based on specific input data.

The model can be a mechanistic model that aims to represent the detailed mechanisms and interactions within a system using mathematical equations, physical laws, or biological principles. "Mechanistic models" are based on explicit knowledge of underlying processes and aim to represent the causal relationships within a system.

The model can be a hybrid model. A "hybrid model" can combine a mechanistic model with a data-driven model. This integration allows for a more comprehensive representation of complex systems, incorporating both domain knowledge and observed data to improve predictive accuracy.

In the case of the present disclosure, one or more models may describe the behaviour of a product applied to the target area. The aim can be to use the model to derive an application rate and/or one or more times and/or periods and/or an application method for the application of the product.

For example, the model can be or include a degradation model that describes how quickly a product applied to the target area degrades.

"Degradation" refers to the process by which chemical compounds, such as active ingredients in pesticides, herbicides, fungicides and/or other products break down and transform over time when exposed to environmental factors. Degradation can occur through various mechanisms, including chemical, physical, and biological processes, leading to the reduction of the compound's concentration and activity.

For the purposes of the present disclosure, a product can be considered degraded if the substances contained therein are degraded to such an extent that they or their degradation products no longer cause environmental damage and/or other undesirable effects.

For example, a maximum application rate of the product and/or an application time can be derived from the degradation rate and/or the half-life and/or another parameter that characterizes the degradation of the product.

The degradation model can, for example, describe the degradation of the product as a function of the conditions prevailing in the target area (weather (e.g. air temperature, humidity, solar radiation), soil conditions (e.g., soil temperature, soil moisture), and as a function of the composition of the product (e.g., formulation type, composition), whereby the conditions prevailing in the target area and the composition of the product may be used as input data in the model.

Based on such a degradation model, a maximum application rate of the product in the target area may be derived, which is then incorporated into the destination-specific product label.

However, it is also possible for the degradation model to directly output a maximum application rate based on the input data.

It is also possible for the degradation model to output a time period between the application of the product and the time of harvest when no further application of the product may or should take place to ensure that the residue level of the product in the crop at the time of harvest is below a predefined threshold. The degradation model can also specify a time by which the product can be applied to ensure that the residue level in the crop is below a predefined threshold at the time of harvest. Predefined thresholds can be set by farmers, crop buyers and/or regulatory authorities.

Degradation models are described in the state of the art (see, e.g., S. Beulke et al.: Evaluation of methods to derive pesticide degradation parameters for regulatory modelling, Biol Fertil Soils 33, 2002, 558-564; M. J. Loos: Modeling of pesticide biodegradation in soil, Master Thesis, ETH Ziirich, https://doi.org/10.3929/ethz-a-006121570).

The model may be or comprise a distribution model. Such a "distribution model" may describe the distribution of the product during and/or after the application of the product in the target area.

For example, the distribution model can use application information (e.g., information on the type of application and/or on the nozzles used and/or on the spray pressure and/or on other/additional application parameters) and/or weather information (e.g. wind direction and/or wind speed and/or precipitation) and/or destination information (e.g., soil characteristics, topology, topography) as input data and use this information (and/or other/further information) to calculate how the product spreads in the target area.

For example, the distribution model can be used to derive the distances that should be maintained from the target area boundaries when applying the product in order to prevent the product from reaching non-target areas (i.e., areas outside the target area boundaries). However, it is also possible for the distribution model to provide such mandatory distances directly.

It is also possible that information about the surroundings of the target area is included in the determination of mandatory distances to the target area boundaries. For example, it is possible that the mandatory distances to a body of water are greater than the mandatory distances to fallow land.

The distances to be maintained from the target area boundaries when applying the product in the target area can be included in the destination-specific product label.

It is possible that the destination-specific product label is variable and can take current conditions into account. For example, the wind direction and/or wind speed can be measured during application of the product and the distances to the target area boundaries can be variably adapted to the measured values during application (see, e.g., WO2022/029055A1).

Distribution models are described in the state of the art (see, e.g., F. van den Berg et al.: PEARL model for pesticide behaviour and emissions in soil-plant systems, WOt-technical report 61, 2016, ISSN 2352-2739; H. Dou et al.: Computational model of pesticide deposition distribution on canopies for air-assisted spraying, Front. Plant Sci., 2023, Volume 14).

The model can also describe different aspects of the product. In the state of the art, for example, numerous models are known as "environmental fate models" that simulate the behaviour of products in the environment, including processes such as degradation, leaching, volatilization and run-off. These models are designed to assess the fate and transport of active ingredients and their breakdown products in various environmental compartments, such as soil, water, air, and vegetation (see, e.g., A. Di Guardo et al.: Environmental fate and exposure models: advances and challenges in 21st century chemical risk assessment, Environ. Sci.: Processes Impacts, 2018, 20, 58-71; N. Suciu et al.: Environmental Fate Models, in: Global Risk-Based Management of Chemical Additives II: Risk-Based Assessment and Management Strategies, Chapter: Environmental fate models, Springer, pp. 47-71).

The model can be an ecological risk assessment model. Such a model evaluates the potential impact of products on non-target organisms, ecosystems, and biodiversity. It considers factors such as toxicity, exposure, and ecological relationships to assess risks to wildlife, aquatic organisms, and beneficial insects (see, e.g., https://www.epa.gov/risk/ecological-risk-models-and-tools).

It is possible that the application of a product in the field is dependent on the risk of pest and/or disease infestation. It is possible that the use of a product is only permitted if the risk of infestation with a harmful organism is above a pre-defined threshold value. Such a predefined threshold value can be set by a regulatory authority, for example.

A "harmful organism" is an organism that occurs during the cultivation of crops and can damage the crop, negatively affect the crop's harvest and/or compete with the crop for natural resources. Examples of such harmful organisms are weeds, animal pests such as beetles, caterpillars and worms, fungi and pathogens (e.g., bacteria and viruses). Even if viruses are not classified as organisms from a biological point of view, they are still be included under the term harmful organism in this disclosure.

The model can therefore also be an infestation model (also known as pest and/or disease model). The infestation model can determine the probability that the target area and/or the crops grown in the target area are infested with a harmful organism.

The model can determine the probability of an infestation based on, for example, the weather and/or the crops grown and/or the nature of the target area's environment. It is also possible that the spread of harmful organisms towards the target area is determined based on data on observed organisms in distant and/or neighbouring areas.

A time or period for the application of the product and/or an application rate can be derived from the infestation model. It is also possible that the infestation model directly specifies (or excludes) a time or period for the application of the product and/or an application rate.

It is also possible to use the model to identify (directly or indirectly) sub-areas in the target area where the product should be applied (e.g., sub-areas with a high risk of pest infestation).

Infestation models are described in the state of the art (see, e.g., P.S. Teng et al.: Simulation of pest effects on crops using coupled pest-crop models: the potential for decision support, in: Understanding Options for Agricultural Production, Systems Approaches for Sustainable Agricultural Development, Vol 7, Springer, https://doi.org/10.1007/978-94-017-3624-4_12; S. Lee, C.M. Yun: A deep learning model for predicting risks of crop pests and diseases from sequential environmental data, Plant Methods Volume 19, 2023, Article number: 145).

It is possible that the amount of the product that can or should be applied to a target area and/or the time or period at which the product can or should be applied depends on the stage of development of the crop/plants being grown and/or on the amount of biomass present. The model can therefore also be a plant growth model.

Such a plant growth model may describe the growth of a plant depending on weather, fertilizers, soil conditions and/or irrigation. For example, the model may calculate what stage of development a plant will be in at a certain point in time and/or when the plant will reach a certain stage of development. For example, the model may calculate how large the biomass will be at a certain point in time and/or at what point in time a certain biomass will be reached.

Input data of a plant growth model may be weather information, crop information and/or destination information.

A time or period for the application of the product and/or an application rate can be derived from the plant growth model. It is also possible that the plant growth model directly specifies a time or period for the application of the product and/or an application rate.

A quantity of the product to be applied can be derived on the basis of the biomass calculated by the plant growth model or the plant growth model can directly provide a quantity of the product to be applied.

Plant growth models are described in the state of the art (see, e.g., T. Fourcard et al.: Plant Growth Modelling and Applications: The Increasing Importance of Plant Architecture in Growth Models, Annals of Botany, Volume 101, Issue 8, 2008, Pages 1053-1063; J. Hilty et al.: Plant growth: the What, the How, and the Why, New Phytologist, Volume 232, Issue 1, 2021, Pages 25-41).

The way in which the product is applied to the target area and/or the time period in which the product is applied to the target area and/or the quantity in which the product is applied to the target area may be determined or influenced by the toxicity of the product.

The model can therefore be or include a toxicological model. A toxicological model can be used to predict the toxicological effects of the product on human health and/or non-target organisms. A toxicological model may help to assess acute and chronic toxicity, as well as potential health risks associated with exposure (see, e.g, F. M. Kluxen et al.: Compounded conservatism in European re-entry worker risk assessment of pesticides, Regulatory Toxicology and Pharmacology, 121, 2021, 104864).

The model can be or include an exposure and risk assessment model. Such a model may estimate human and/or environmental exposure to products and assess associated risks. It usually considers factors such as application methods, worker exposure, dietary exposure, and environmental concentrations to evaluate potential risks (see, e.g.: A. Charistou et al.: Guidance on the assessment of exposure of operators, workers, residents and bystanders in risk assessment of plantprotection products, European Food Safety Authority (EFSA) Journal, 2021, doi: 10.2903/j.efsa.2022.7032).

An optimal or preferred time period for the application of a product can be derived from a model or a model can provide this information directly as an output. The optimal or preferred time period may refer to a time period in which the risk of humans and/or animals coming into contact with the product is lower than in other time periods. For example, applying the product at night may pose a lower risk of contamination than applying it during the day. If there is a school near the target area, it may be preferably to apply the product during a school-free period.

The amount of product to be applied can be derived based on the toxicity model, or the toxicity model can directly provide an amount of product to be applied.

The model can be or include a residue and/or metabolism model. Such a model may predict the formation and behaviour of residues in crops, soil, and the environment. Such a model may provide information on residue levels, degradation rates, and the potential for carryover into subsequent crops (see, e.g., M. Ebeling, K. Hammel: Evaluating plant residue decline data with KinGUII and TREC: results from case studies involving also non-SFO kinetic models, Environ Sci Eur 32, 2020, 116).

It is possible that the application of a product in the target area is dependent on the presence of non-target organisms. It is possible that the use of a product is only permitted if the risk to non-target organisms is below a pre-defined threshold value. Such a predefined threshold value can be set by a regulatory authority, for example.

A "non-target organism" is an organism that occurs during the cultivation of crops but is not the target of the application of the product. Examples of such non-target organisms are mammals, birds, pollinators, soil organism, micro-organisms.

The model can therefore also be a "population model". The population model can determine the probability that a species is occurring in the target area and/or the vicinity of the target area.

The model can determine the probability of species presence based on, for example, the weather and/or the crops grown and/or the behaviour of the species (e.g., night-feeding), migration pattern, natural habitat, other organic presence (i.e., predatory birds feeding on mice). It is also possible that the presence of non-target organisms towards the target area is determined based on data on observed organisms in distant and/or neighbouring areas.

A time or period for the application of the product and/or an application rate can be derived from the non-target organism model. It is also possible that the non-target organism model directly specifies (or exclude) a time or period for the application of the product and/or an application rate (amount of product to be applied).

It is also possible to use the model to identify (directly or indirectly) sub-areas in the target area where the product should not or must not be applied (e.g., sub-areas with a high occurrence of non-target organisms).

The models listed here are only examples. There may be further/other models.

Models used to generate the destination-specific product label can, for example, be defined by a regulatory authority. Models can be continuously developed and adapted to the advancing state of the art. It is possible that regulatory authorities manage and/or provide the models and/or enable users to access the models in the form of links, for example.

Models used to generate a destination-specific product label may be components of the computer program of the present disclosure. However, it is also possible that the models are hosted separately and the computer program of the present disclosure is configured to access these models (e.g., via an application programming interface (API), over a network).

The destination-specific product label refers to a specific area (the target area). The destination-specific product label refers to a specific product. The specific product can also be a combination of several (i.e., more than one) products.

The destination-specific product label therefore comprises instructions, recommendations and/or prohibitions that are specific to the target area and the product(s). However, the destination-specific product label may also include information that are non-specific and that apply to all products or products of a certain type and/or all areas (e.g., fields) or areas of a certain type.

Instructions, recommendations and/or prohibitions that are destination-specific are, for example, the following:
The destination-specific product label may contain information about when (at which time (e.g., day(s) or time of a day) the product may be applied to the target area.

The destination-specific product label may contain information about when (at which time (e.g., day(s) or time of a day) the product should preferably be applied.

The destination-specific product label may contain information about when (at which time (e.g., day(s) or time of a day) the product should preferably not be applied.

The destination-specific product label may contain information about when (at which time (e.g., day(s) or time of a day) the product must not be applied.

The destination-specific product label may contain information on the time interval that should or must be observed between two consecutive applications of the product.

The destination-specific product label may contain information on the quantities of the product that may be applied in the target area. The quantities may be the same or may vary within the target area.

The destination-specific product label may contain information on how the product must, must not, can and/or should be applied.

The destination-specific product label may contain information on where the product must, must not, can and/or should be applied.

The destination-specific product label may contain information on the distances that must be maintained from the target area's boundaries. The distances may be the same for all target area boundaries or may vary depending on the type of adjacent areas, for example.

The destination-specific product label may contain information on the circumstances under which the product should not or must not be applied. The circumstances may relate to weather conditions (e.g., no application during rain and/or during rain on one or more subsequent days; no application on days when solar radiation exceeds a certain threshold to avoid phototoxicity; no application when a specified wind speed is exceeded; no application on days when beneficial insects and/or certain animal species are present in the target area and/or the probability of their presence is above a certain threshold).

The destination-specific product label may contain information about the application method and/or application parameters to be observed.

The destination-specific product label can be output (e.g., displayed on a screen or printed on a printer) and/or stored in a data memory and/or transmitted to a separate computer system. The destination-specific product label may be transmitted to an application device (e.g., spraying device).

The destination-specific product label can be a printed or printable document.

The destination-specific product label may contain a certificate stating that the destination-specific product label contains an official authorization for the use of a product in a target area.

The destination-specific product label is preferably a digital product label.

A "digital product label" refers to an electronic or digital representation of a product label, typically accessible through digital platforms such as websites, mobile applications, and/or electronic databases. The digital format provides users, including farmers, agricultural professionals, and regulatory authorities, with convenient access to comprehensive information about products.

Digital product labels may provide easy and immediate access to detailed information about products, including their approved uses, application instructions, safety precautions, and regulatory compliance details. Users can access this information from various digital devices, such as smartphones, tablets, laptops, and/or desktop computers.

Digital product labels may offer interactive features, such as search functionalities, hyperlinks to additional resources, and multimedia content (e.g., videos, images) that enhance the user experience and understanding of the product.

Digital product labels can be updated in real time to reflect changes in product formulations, regulatory requirements, and/or safety information. This ensures that users have access to the most current and accurate information about the product.

Digital product labels can provide multilingual support, allowing users to access product information in their preferred language, thereby enhancing accessibility and understanding.

By offering product information in a digital format, the need for printed materials is reduced, contributing to environmental sustainability through paper and resource conservation.

Digital product labels can facilitate compliance with regulatory requirements and support traceability efforts by providing comprehensive and standardized product information.

The destination-specific product label may contain machine instructions that can be followed by an application device (e.g., spraying device) when applying the product in the target area.

The machine instructions can be used at least in part to control the application device. The destination-specific product label may contain a digital map of the target area. A "digital map" is a geospatial representation of (e.g., agricultural) land, resources, or features that is stored and displayed in a digital format. Such a digital map may be created using geographic information system (GIS) technology and may include various layers of information such as soil types, crop distribution, topography, land use, irrigation systems, and/or infrastructure. A digital map may contain three-dimensional information about the target area, e.g., contours, elevations, depressions, the height of plants and/or their lateral spread at different distances from the ground.

Digital maps in agriculture are used for a wide range of purposes including precision farming, resource management, crop planning, and decision-making. By integrating various data layers, these maps provide valuable insights for farmers and agricultural professionals, aiding in tasks such as optimizing planting patterns, managing water resources, and monitoring crop health. Furthermore, digital maps facilitate the implementation of precision agriculture techniques, allowing for more efficient and sustainable farming practices.

The digital map may indicate the quantities of products that should/could be applied in the target area or in individual subareas of the target areas. The machine instructions can ensure that the appropriate quantities of products are applied, e.g., via one or more nozzles when the application device is located in the appropriate sub-areas of the target area. The location of the application device can be determined using a GPS receiver, for example. The machine instructions can ensure that the required distances to the target area boundaries are maintained. The machine instructions can ensure that the appropriate and/or approved spray nozzles are used. The machine instructions can ensure that products are only applied if this is intended according to the destination-specific product label.

The application process is preferably documented. Such a documentation records when and where which quantities of products were applied. The conditions prevailing during application (e.g., weather conditions (e.g., wind direction, wind strength, air temperature, humidity, air pressure)) can be recorded in the documentation, too. The application method/application parameters used can be recorded in the documentation, too.

The documentation may contain all information/data that was used to generate the destination-specific product label or that led to the recommendations/instructions/prohibitions contained in the destination-specific product label. The documentation may contain the models and/or model parameters that were used to generate the destination-specific product label.

The documentation can be part of the destination-specific product label. With the help of the documentation, a farmer can prove that he/she has applied the product in accordance with the instructions in the destination-specific product label.

The documentation may be passed on to third parties (e.g., regulatory authorities, supervisory authorities, distributors, retailers, customers, manufacturers, traders, processors) in order to prove compliance with (market) standards as well as the origin of products and the way they are manufactured.

If, for example, a time interval is specified in the destination-specific product label that should/must lie between two applications of one or more products, the documentation can be used to record a first application and check whether the specified time interval is adhered to for the second application.

Information in the documentation on previous crops and/or previous applications of products can provide information on what is possible/permissible for the current crop.

Access to a destination-specific product label and/or to the method for generating the destination-specific product label can be granted to a user, for example, as part of the purchase of the product. Access can be granted, e.g., via a container in which the product is stored and offered for sale and/or in a package insert of the product, e.g., in the form of an Internet address (e.g., a URL). The Internet address can be provided in the form of an optically readable code (e.g., QR code, data matrix code) and/or in alphanumeric, human-readable form. With such a code, the user can be directed to an Internet address that provides a user interface (web application, software as a service) for generating a destination-specific product label for the purchased product.

It is also possible that the user accesses a computer program (for example in an app store) via the Internet address, which he/she can download to his/her computer system and execute in order to generate a destination-specific product label for the purchased product.

It is possible that the purchased product contains a conventional product label if the user is not technically able to generate a destination-specific product label and/or is afraid of the effort and/or does not have the necessary data to create the destination-specific product label and/or prefers a conventional product label for other reasons.

However, the destination-specific product label has advantages over a conventional product label. It is tailored to the needs and characteristics of the target area in which the purchased product is to be used. It offers the maximum achievable benefit of the product for the target area and at the same time ensures maximum safety for people, beneficial organisms, and the environment.

It is also possible that the computer program for creating a destination-specific product label is provided via a web portal (e.g., as a software-as-a-service product.) by the regulatory authority and/or a service provider.

Provision via a web portal and/or as software-as-a-service has the advantage that the computer program can always be kept up-to-date and quickly adapted to changing (e.g., legal) conditions.

The destination-specific product label may contain a digital certificate (e.g., a digital signature) that certifies the authenticity of the destination-specific product label, e.g., to prevent counterfeiting and/or tampering.

The destination-specific product label can be continuously updated and thus adapted to changing conditions (both of a legal nature and in relation to the target area and/or the product).

The web application and/or computer program that allows the user to generate a destination-specific product label can be provided by a regulatory authority. However, it is also possible for the web application and/or computer program to be provided by the manufacturer and/or distributor of the product and/or an independent service provider.

The user can enter data into the web application and/or the computer program via a user interface and receives a destination-specific product label as output.

The destination-specific product label can be limited in time (e.g., to the current growing season and/or the shelf life of the product).

It is also possible that the destination-specific product label is only valid for a specific weather period and that a new destination-specific product label must be generated for the prevailing weather after the specific weather period has expired.

It is possible that an application device, which uses machine instructions of the destination-specific product label to apply a product in a target area, verifies the authenticity of the destination-specific product label and/or the validity of the destination-specific product label before the application. It is possible that the application device is configured to send a request via a network (e.g., via a mobile network) to the regulatory authority and/or the manufacturer of the product and/or an independent service provider as to whether the label is genuine and/or whether it is still valid.

If there is a digital certificate and/or a digital validity date until which the label is valid, the request can be answered automatically and, depending on the result of the check of the request, approval for the application can be granted (if the label is genuine and valid) or no approval can be granted (if the label is not genuine and/or no longer valid).

The application device may be configured so that it only executes the application in accordance with the machine instruction if an approval was granted. The application device can be configured to document (record) the application and send the documentation via the network to the regulatory authority and/or the service provider so that they can check (preferably automatically) whether the application has been carried out in accordance with the destination-specific product label.

In another aspect, the present disclosure provides a computer program product. Such a computer program product comprises a non-transitory (i.e., non-volatile) data carrier, such as a CD, a DVD, a USB stick or other medium for storing data. A computer program is stored on the data carrier. The computer program can be loaded into a working memory of a computer system, where it can cause the computer system to perform the following steps:
- receiving destination information about a target area where a product is to be applied,
- receiving product information about the product to be applied in the target area,
- generating a destination-specific product label for the application of the product in the target area based on the information received,
- outputting the destination-specific product label.

The computer program can also be offered for download in an app store or via a website.

The computer program product may also be marketed in combination with a product (such as a crop protection product). Such a combination is also referred to as a kit. Such a kit includes the product and the computer program product. It is also possible that such a kit includes the product and means for allowing a purchaser to obtain the computer program, e.g., download it from a website or an app store. These means may include a link, i.e., an address of the website from which the computer program may be obtained, e.g., from which the computer program may be downloaded to a computer system connected to the Internet. Such means may include a code (e.g., an alphanumeric string or a QR code, or a DataMatrix code or a barcode or other optically and/or electronically readable code) by which the purchaser can access the computer program. Such a link and/or code may, for example, be printed on a package of the product and/or printed on a package insert for the product. A kit is thus a combination product comprising a product and a computer program (e.g., in the form of access to the computer program or in the form of executable program code on a data carrier) that is offered for sale together.

The invention is explained in more detail below with reference to the drawings, without the invention being intended to be limited to the features and/or combinations of features shown in the drawings.

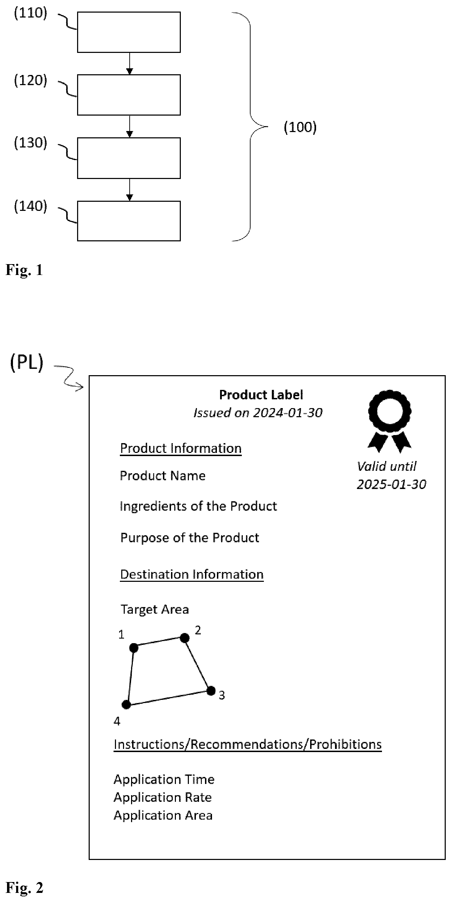

Fig. 1 shows an exemplary and schematic embodiment of the computer-implemented method of generating a destination-specific product label in the form of a flow chart.

The method (100) comprises the steps:

| | |
|---|---|
| (110) | receiving destination information about a target area where a product is to be applied, |
| (120) | receiving product information about the product to be applied in the target area, |
| (130) | generating a destination-specific product label for the application of the product in the target area based on the information received, |
| (140) | outputting the destination-specific product label. |

The destination-specific product label can be displayed, e.g., on a monitor, and/or printed out on a printer. The destination-specific product label can be saved in a data memory. The destination-specific product label can be transmitted to another computer system, for example via a network. The destination-specific product label can be transmitted to an application device for the application of the product in the target area in accordance with the information contained in the destination-specific product label.

Fig. 2 shows a schematic example of a destination-specific product label. The destination-specific product label of the present disclosure is preferably a digital product label; however, it preferably comprises human readable information in the form of text, figures, illustrations, drawings and/or other graphical representations. At least a portion of the destination-specific product label may therefore be displayable on a monitor and/or printable using a printer.

The destination-specific product label (PL) shown in Fig. 2 has a date on which it was generated (*Issued on 2024-01-30).*

The destination-specific product label can also contain information about who generated it and/or which computer program / software was used to generate it (e.g., in the form of a version number).

The destination-specific product label (PL) shown in Fig. 2 is provided with a certificate that certifies the authenticity of the destination-specific product label. The certificate contains a date indicating how long the destination-specific product label is valid (in this case, it is valid until January 30, 2025).

Preferably, the destination-specific product label includes a digital signature that can be used to electronically verify the authenticity and validity of the label. Preferably, the computer program of the present disclosure and/or a further computer program comprises means for online verification of the digital signature. For this purpose, the label with the signature may be loaded into the computer system of the present disclosure or another computer system. The computer system may be configured to verify the authenticity of the digital signature, as described in publications on asymmetric encryption (see, e.g., Federal Information for Information Security: *Basics of Digital Signature Techniques and Trust Services,* Version 2.0, April 2023), for example.

The destination-specific product label (PL) shown in Fig. 2 contains production information. The product information includes the product name, the ingredients of the product and the purpose of the product. The purpose of the product may indicate, for example, what type of product it is (e.g., fungicide, or pesticide, or herbicide) and/or for which crop it is used and/or against which harmful organism it is used.

The destination-specific product label (PL) shown in Fig. 2 contains destination information. The destination information indicates where the product is to be used (target area). The destination-specific product label is also intended for this target area, i.e., the destination-specific product label is only valid for this target area since it was generated on the basis of information that is specific to this target area.

In this example, the target area is specified by its boundaries in relation to the surrounding areas. The boundaries are specified by the edges of a polygon. The polygon is given by four corner points (1, 2, 3, 4). Geocoordinates can be specified for the corner points.

The destination-specific product label (PL) shown in Fig. 2 contains instructions, recommendations and/or prohibitions. These specify the time at which application is permitted (application time), the quantities that may be applied (application rate) and where exactly in the target area application is permitted (application area). The application rates can also vary within the application area. The information, or at least part of it, can also be in the form of machine instructions.

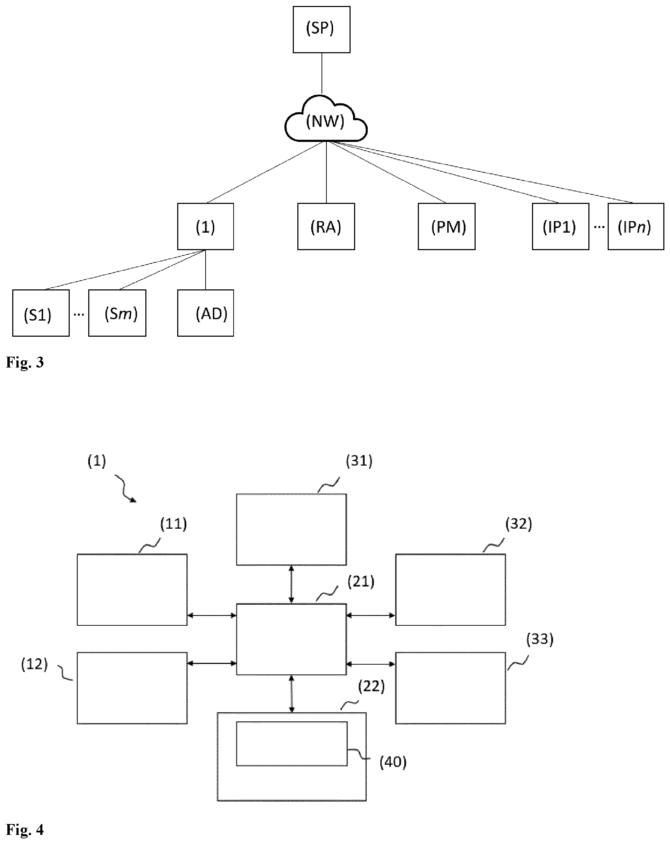

Fig. 3 shows an exemplary and schematic computer and network architecture for implementing the present invention.

The architecture shown in Fig. 3 comprises a number of computer systems that are connected to each other via a network (NW) and can send and/or receive information via this network. The network (NW) can include the Internet, for example.

The architecture shown in Fig. 3 comprises a first computer system (1) that is operated by a user (e.g., a farmer) to generate a destination-specific product label.

To generate the destination-specific product label, the user accesses software, which in this example is provided by a service provider (SP) as software-as-a-service via the network (NW).

The user can enter the information required to generate the destination-specific product label into the first computer system (1). The user may be guided by the software that retrieves the relevant information. The information includes *inter alia* destination information, i.e., the user specifies the target area for which the application of a product is intended.

The information used to generate the destination-specific product label can be supplied by one or more sensors (S1, ..., S*m*).

In the example shown in Fig. 3, the sensors (S1, ..., S*m*) are directly connected to the first computer system (1); however, it is also possible that one or more sensors are connected to the first computer system (1) via the network (NW).

It is possible for the user of the first computer system (1) to specify a product for which the destination-specific product label is to be generated. It is also possible for the user to generate different labels for different products. The architecture shown in Fig. 3 comprises a computer system (PM) of a product manufacturer. The software used by the user of the first computer system (1) can be configured to retrieve product information from the product manufacturer's computer system (PM) in order to include it in the generation of the destination-specific product label.

The software can be configured to receive further information from one or more computer systems (IP1, ..., IP*n*) of one or more further information providers. This may be weather information, soil information, satellite images, crop information, environmental information, destination information, and/or similar.

One or more models, which are part of the software and/or which the software can access, determine which information is required to generate the destination-specific product label.

The one or more models may be defined and/or provided and/or monitored and/or updated by a regulatory authority (RA). The regulatory authority can also act as the service provider. The product manufacturer can also act as a service provider.

The generated destination-specific product label is made available to the user of the first computer program (1). The user of the first computer program may transmit the generated label or a part thereof to an application device (AD). The application device (AD) may be at least partially controlled and/or directed by machine instructions, which may be part of the destination-specific product label.

The application device can be directly connected to the first computer system (1) or connected to the first computer system (1) via the network (NW).

It is possible that the application device (AD) is configured to record and document an application process. It is possible that the application device (AD) is configured to transmit information about the recorded application process to the first computer system (1). It is possible that the first computer system (1) is configured to transmit a recorded and documented application process to the regulatory authority (RA).

The example shown in Fig. 3 is only one example of a possible architecture for implementing the present invention. Many other architectures are possible. For example, it is possible that the software for generating a destination-specific product label is stored and executed on the first computer system.

Fig. 4 shows an exemplary and schematic computer system for carrying out the present invention. The computer system (1) depicted in Fig. 4 may be the first computer system shown (1) in Fig. 3. However, the other computer systems shown in Fig. 3 may also be as shown in Fig. 4 and described with reference to Fig. 4.

A "computer system" is an electronic data processing system that processes data by means of programmable calculation rules. Such a system typically comprises a "computer", which is the unit that includes a processor for carrying out logic operations, and peripherals.

In computer technology, "peripherals" refers to all devices that are connected to the computer and are used for control of the computer and/or as input and output devices. Examples thereof are monitor (screen), printer, scanner, mouse, keyboard, drives, camera, microphone, speakers, etc. Internal ports and expansion cards are also regarded as peripherals in computer technology.

The computer system (1) shown in Fig. 4 comprises a processing unit (21) connected to a storage medium (22).

The processing unit (21) may comprise one or more processors alone or in combination with one or more storage media. The processing unit (21) may be customary computer hardware that is able to process data, computer programs, models and/or other digital information. The processing unit (21) normally consists of an arrangement of electronic circuits, some of which can be designed as an integrated circuit or as a plurality of integrated circuits connected to one another (an integrated circuit is sometimes also referred to as a "chip"). The processing unit (21) may be configured to execute computer programs that can be stored in a working memory of the processing unit (21) or in the storage medium (22) of the same or of a different computer system.

The storage medium (22) may be customary computer hardware that is able to store information, data, models, computer programs and/or other digital information either temporarily and/or permanently. The storage medium (22) may comprise a volatile and/or non-volatile storage medium and may be fixed in place or removable. Examples of suitable storage media are RAM (random access memory), ROM (read-only memory), a hard disk, a flash memory, an exchangeable computer floppy disk, an optical disc, a magnetic tape or a combination of the aforementioned. Optical discs can include compact discs with read-only memory (CD-ROM), compact discs with read/write function (CD-R/W), DVDs, Blu-ray discs and the like.

The processing unit (21) may be connected not just to the storage medium (22), but also to one or more interfaces (11, 12, 31, 32, 33) in order to display, transmit and/or receive information. The interfaces may comprise one or more communication interfaces (11, 32, 33) and/or one or more user interfaces (12, 31). The one or more communication interfaces may be configured to send and/or receive information, for example to and/or from other computer systems, networks, data storage media, application devices, sensors, and/or the like. The one or more communication interfaces may be configured to transmit and/or receive information via physical (wired) and/or wireless communication connections. The one or more communication interfaces may comprise one or more interfaces for connection to a network, for example using technologies such as mobile telephone, wifi, satellite, cable, DSL, optical fibre and/or the like. In some examples, the one or more communication interfaces may comprise one or more close-range communication interfaces configured to connect devices having close-range communication technologies such as NFC, RFID, Bluetooth, Bluetooth LE, ZigBee, infrared (e.g. IrDA) or the like.

The user interfaces may include a display (31). A display (31) may be configured to display information to a user. Suitable examples thereof are a liquid crystal display (LCD), a light-emitting diode display (LED), a plasma display panel (PDP) or the like. The user input interface(s) (11, 12) may be wired or wireless and may be configured to receive information from a user in the computer system (1), for example for processing, storage and/or display. Suitable examples of user input interfaces are a microphone, an image- or video-recording device (for example a camera), a keyboard or a keypad, a joystick, a touch-sensitive surface (separate from a touchscreen or integrated therein) or the like. In some examples, the user interfaces may contain an automatic identification and data capture technology (AIDC) for machine-readable information. This can include barcodes, radiofrequency identification (RFID), magnetic strips, optical character recognition (OCR), integrated circuit cards (ICC) and the like. The user interfaces may in addition comprise one or more interfaces for communication with peripherals such as printers and the like.

One or more computer programs (40) may be stored in the storage medium (22) and executed by the processing unit (21), which is thereby programmed to fulfil the functions described in this disclosure. The retrieving, loading and execution of instructions of the computer program (40) may take place sequentially, such that an instruction is respectively retrieved, loaded and executed. However, the retrieving, loading and/or execution may also take place in parallel.

The computer system of the present disclosure may be designed as a laptop, notebook, netbook and/or tablet PC.

Further embodiments are:
1. A computer-implemented method of generating a destination-specific product label, the method comprising:
   - receiving destination information about a target area where a product is to be applied,
   - receiving product information about the product to be applied in the target area, wherein the product is or comprises a crop protection product,
   - generating a destination-specific product label for the application of the product in the target area based on the information received,
   - outputting the destination-specific product label.

   wherein the product is subject to a regulatory approval and may only be used after regulatory approval has been granted and for as long as the approval exists and under the conditions and in the target area for which the approval was granted,
   wherein the destination-specific product label is or comprises the regulatory approval for the application of the product in the target area, wherein the regulatory approval only applies to the application of the product in the target area,
   wherein the target area is or comprises an agricultural field for the cultivation of crops,
   wherein the destination information specifies the target area, and/or specifies an amount of biomass present in the target area, and/or includes topographic and/or topological information about the target area, and/or includes information about soil in the target area, the information about soil comprising one or more of the following: soil type, soil texture, soil pH, organic matter content, nutrient levels, cation exchange capacity, soil structure, water holding capacity, soil drainage characteristics, soil depth, soil temperature, soil moisture, type and/or quantity of living organisms in the soil,
   wherein at least part of the destination information is obtained using remote sensing, and wherein at least part of the destination information is spatially resolved information,
   wherein the destination-specific product label is a digital product label.
2. The method of embodiment 1, wherein the product is subject to a regulatory approval and may only be used after regulatory approval has been granted and/or for as long as the approval exists and/or under the conditions and/or in the target area for which the approval was granted.
3. The method of embodiment 2, wherein the destination-specific product label is or comprises the regulatory approval for the application of the product in the target area.
4. The method of any one of embodiments 1 to 3, wherein the product is or comprises a crop protection product, a plant strengthener, a plant growth regulator, a biostimulant, and/or a soil auxiliary substance
5. The method of any one of embodiments 1 to 4, wherein the target area is or comprises an agricultural field for the cultivation of crops.
6. The method of any one of embodiments 1 to 5, wherein receiving product information about the product to be applied in the target area comprises:
   - receiving a product identifier,
   - retrieving product information from one or more databases based on the product identifier.
7. The method of any one of embodiments 1 to 6, wherein receiving product information about the product to be applied in the target area comprises:
   - receiving information about a crop and/or a harmful organism,
   - selecting one or more products based on the information about the crop and/or the harmful organism,
   - retrieving product information of the one or more selected products from one or more databases.
8. The method of embodiment 7, further comprising:
   - generating a destination-specific product label for each of the selected products,
   - outputting each destination-specific product label.
9. The method of any one of embodiments 1 to 8, wherein the destination information
   - specifies the target area, and/or
   - specifies an amount of biomass present in the target area, and/or
   - includes topographic and/or topological information about the target area, and/or
   - includes information about soil in the target area, the information about soil comprising one or more of the following: soil type, soil texture, soil pH, organic matter content, nutrient levels, cation exchange capacity, soil structure, water holding capacity, soil drainage characteristics, soil depth, soil temperature, soil moisture, type and/or quantity of living organisms in the soil.
10. The method of embodiment 9, wherein at least part of the information about the soil in the target area is obtained from one or more sensors located in the target area.
11. The method of any one of embodiments 1 to 10, wherein at least part of the destination information is obtained using remote sensing.
12. The method of any one of embodiments 1 to 11, wherein at least part of the destination information is spatially resolved information.
13. The method of any one of embodiments 1 to 12, further comprising:
   - receiving environmental information, wherein the environmental information specifies and/or characterizes the surroundings of the target area.
14. The method of embodiment 13, wherein the environmental information indicates:
   - whether there is a nature reserve and/or a groundwater protection area in vicinity of the target area and/or how far the target area is from the nature reserve and/or groundwater protection area, and/or
   - what vegetation is present in vicinity of the target area, and/or
   - whether there are roads and/or inhabited areas in vicinity of the target area and/or how far the target area is from roads and/or inhabited areas, and/or
   - which soil types are adjacent to the target area and/or which properties the adjacent soil has, and/or
   - whether animals are kept and/or present in vicinity of the target area and/or at what distance from the target area and/or what type of animals are present, and/or
   - minimum, maximum, and/or preferred thresholds, boundaries, limitations and/or restrictions required by a regulatory authority to protect humans, animals, and/or non-target organism in the target area and/or the environment, and/or
   - whether and/or what quantities of one or more products were applied to neighbouring areas and/or farming practices used in neighbouring areas, and/or
   - topology, topography, weather, climate, and/or vegetation of the environment to the target area.
15. The method of any one of embodiments 1 to 14, further comprising:
   - receiving crop information, wherein the crop information specifies and/or characterizes a crop that was, is, and/or will be grown in the target area.
16. The method of embodiment 15, wherein the crop information includes:
   - information on the crop species and/or the crop variety, and/or
   - information on whether and/or how the crop has been genetically modified, and/or
   - information about a stage of development of the crop and/or when it was planted or sown and/or whether and/or when it was fertilized and/or whether and/or when it was irrigated, and/or
   - information on whether the crop has already been treated with one or more products and/or with which product(s) the crop has been treated and/or when it has been treated with one or more products and/or how it has been treated with one or more product(s), and/or
   - information about which crops were previously grown in the target area, and/or
   - information on the amount of crop biomass present in the target area.
17. The method of any one of embodiments 1 to 16, further comprising:
   - receiving application information, wherein the application information specifies and/or characterizes one or more intended applications of the product in the target area.
18. The method of embodiment 17, wherein the application information
   - indicates which application means are available and/or how they can be used, and/or
   - specifies a time period in a future for which an application of the product in the target area is planned, and/or
   - indicates where the product is intended to be applied.
19. The method of any one of embodiments 1 to 18, further comprising:
   - receiving weather information about weather in the target area at a time the product is intended to be used in the target area.
20. The method of any one of embodiments 1 to 19, wherein generating a destination-specific product label for the application of the product in the target area based on the information received comprises:
   - providing a model,
   - inputting the information received into the model,
   - receiving an output from the model,
   - deriving instructions, recommendations and/or prohibitions for the application of the product in the target area from the output of the model,
   - including the instructions, recommendations and/or prohibitions in the destination-specific product label.
21. The method of embodiment 20, wherein the model is or comprises one or more of the following:
   - a degradation model that describes how quickly a product and/or one or more ingredients of the product applied to the target area degrade(s),
   - a distribution model that describes a distribution of the product during and/or after the application of the product in the target area,
   - an environmental fate model that simulates a behaviour of the product in the target area, including processes such as degradation, leaching, volatilization and/or run-off,
   - an ecological risk assessment model that evaluates a potential impact of the product on non-target organisms, ecosystems, and/or biodiversity in the target area,
   - a pest and/or disease model that determines a probability that the target area and/or the crops grown in the target area are infested with one or more harmful organisms,
   - a plant growth model that describes a growth of a plant in the target area depending on weather, fertilizers, soil conditions and/or irrigation,
   - a toxicological model that predicts toxicological effects of the product on human health and/or non-target organisms in the target area and/or surroundings of the target area,
   - an exposure and risk assessment model that estimates human and/or environmental exposure to the product and associated risks,
   - a residue and/or metabolism model that predicts formation and behaviour of residues of the product in crops and/or soil in the target area and/or the environment,
   - a population model that determines a probability that a non-target organism is occurring in the target area and/or the vicinity of the target area.
22. The method of any one of embodiments 1 to 21, wherein the destination-specific product label comprises one or more of the following:
   - information about when the product may be applied to the target area,
   - information about when the product should preferably be applied to the target area,
   - information about when the product should preferably not be applied to the target area,
   - information about when the product should not and/or must not be applied to the target area,
   - information on a time interval that should or must be observed between two consecutive applications of the product in the target area,
   - information on a quantity of the product that may be applied in the target area,
   - information on which quantities may be applied in which sub-areas of the target area,
   - information on how the product must, must not, can, should and/or should not be applied,
   - information on where the product must, must not, can and/or should be applied,
   - information on a distance that must be maintained from the target area's boundaries,
   - information on circumstances under which the product should not or must not be applied,
   - information about an application method and/or application parameters to be observed when applying the product to the target area,
   - information about when the destination-specific product label was generated,
   - information about who initiated the generation of the destination-specific product label,
   - information about which computer program was used to generate the destination-specific product label,
   - information about which model or models were used to generate the destination-specific product label,
   - information on when the destination-specific product label is valid until,
   - a certificate stating that the destination-specific product label contains an official authorization for the use of the product in the target area,
   - a digital signature that can be used to check whether the destination-specific product label is genuine and/or until when the destination-specific product label is valid,
   - machine instructions for controlling and/or directing an application device,
   - a digital map of the target area,
   - a digital map that indicates quantities of the product that should/could be applied in the target area and/or in individual sub-areas of the target areas.
23. The method of any one of embodiments 1 to 22, wherein the destination-specific product label is a digital product label.
24. The method of any one of embodiments 1 to 23, further comprising:
   - transmitting the destination-specific product label to an application device for controlling and/or directing the application device when applying the product in the target area.
25. The method of any one of embodiments 1 to 24, further comprising:
   - monitoring the application of the product in the target area by an application device.
26. The method of any one of embodiments 1 to 25, further comprising:
   - checking whether the product is and/or was applied to the target area in accordance with the information in the destination-specific label.
27. The method of any one of embodiments 1 to 26, further comprising:
   - receiving information on the use of the product in the target area from an application device,
   - transmitting the information on the use of the product in the target area to a regulatory authority.

## Claims

1. A computer-implemented method of generating a destination-specific product label (PL), the method comprising:
• receiving destination information about a target area where a product is to be applied, wherein the product is or comprises a crop protection product,
• receiving product information about the product to be applied in the target area,
• generating a destination-specific product label (PL) for the application of the product in the target area based on the information received,
• outputting the destination-specific product label (PL),
**characterised in that** the product is subject to a regulatory approval and may only be used after regulatory approval has been granted and for as long as the approval exists and under the conditions and in the target area for which the approval was granted,
wherein the destination-specific product label (PL) is or comprises the regulatory approval for the application of the product in the target area, wherein the regulatory approval only applies to the application of the product in the target area,
wherein the target area is or comprises an agricultural field for the cultivation of crops,
wherein the destination information specifies the target area, and/or specifies an amount of biomass present in the target area, and/or includes topographic and/or topological information about the target area, and/or includes information about soil in the target area, the information about soil comprising one or more of the following: soil type, soil texture, soil pH, organic matter content, nutrient levels, cation exchange capacity, soil structure, water holding capacity, soil drainage characteristics, soil depth, soil temperature, soil moisture, type and/or quantity of living organisms in the soil,
wherein at least part of the destination information is obtained using remote sensing, and wherein at least part of the destination information is spatially resolved information,
wherein the destination-specific product label (PL) is a digital product label.

2. The method of claim 1, wherein receiving product information about the product to be applied in the target area comprises:
- receiving information about a crop and/or a harmful organism,
- selecting one or more products based on the information about the crop and/or the harmful organism,
- retrieving product information of the one or more selected products from one or more databases,
- generating a destination-specific product label (PL) for each of the selected products,
- outputting each destination-specific product label (PL).

3. The method of claim 1, wherein at least part of the information about the soil in the target area is obtained from one or more sensors (S1, ..., S*m*) located in the target area.

4. The method of any one of claims 1 to 3, further comprising:
• receiving environmental information, wherein the environmental information specifies and/or characterizes the surroundings of the target area.
wherein the environmental information indicates:
- whether there is a nature reserve and/or a groundwater protection area in vicinity of the target area and/or how far the target area is from the nature reserve and/or groundwater protection area, and/or
- what vegetation is present in vicinity of the target area, and/or
- whether there are roads and/or inhabited areas in vicinity of the target area and/or how far the target area is from roads and/or inhabited areas, and/or
- which soil types are adjacent to the target area and/or which properties the adjacent soil has, and/or
- whether animals are kept and/or present in vicinity of the target area and/or at what distance from the target area and/or what type of animals are present, and/or
- minimum, maximum, and/or preferred thresholds, boundaries, limitations and/or restrictions required by a regulatory authority (RA) to protect humans, animals, and/or non-target organism in the target area and/or the environment, and/or
- whether and/or what quantities of one or more products were applied to neighbouring areas and/or farming practices used in neighbouring areas, and/or
- topology, topography, weather, climate, and/or vegetation of the environment to the target area.

5. The method of any one of claims 1 to 4, further comprising:
• receiving crop information, wherein the crop information specifies and/or characterizes a crop that was, is, and/or will be grown in the target area,
wherein the crop information includes:
- information on the crop species and/or the crop variety, and/or
- information on whether and/or how the crop has been genetically modified, and/or
- information about a stage of development of the crop and/or when it was planted or sown and/or whether and/or when it was fertilized and/or whether and/or when it was irrigated, and/or
- information on whether the crop has already been treated with one or more products and/or with which product(s) the crop has been treated and/or when it has been treated with one or more products and/or how it has been treated with one or more product(s), and/or
- information about which crops were previously grown in the target area, and/or
- information on the amount of crop biomass present in the target area.

6. The method of any one of claims 1 to 5, further comprising:
• receiving application information, wherein the application information specifies and/or characterizes one or more intended applications of the product in the target area.
wherein the application information
- indicates which application means are available and/or how they can be used, and/or
- specifies a time period in a future for which an application of the product in the target area is planned, and/or
- indicates where the product is intended to be applied.

7. The method of any one of claims 1 to 6, wherein generating a destination-specific product label (PL) for the application of the product in the target area based on the information received comprises:
- providing a model,
- inputting the information received into the model,
- receiving an output from the model,
- deriving instructions, recommendations and/or prohibitions for the application of the product in the target area from the output of the model,
- including the instructions, recommendations and/or prohibitions in the destination-specific product label (PL).
wherein the model is or comprises one or more of the following:
- a degradation model that describes how quickly a product and/or one or more ingredients of the product applied to the target area degrade(s),
- a distribution model that describes a distribution of the product during and/or after the application of the product in the target area,
- an environmental fate model that simulates a behaviour of the product in the target area, including processes such as degradation, leaching, volatilization and/or run-off,
- an ecological risk assessment model that evaluates a potential impact of the product on non-target organisms, ecosystems, and/or biodiversity in the target area,
- a pest and/or disease model that determines a probability that the target area and/or the crops grown in the target area are infested with one or more harmful organisms,
- a plant growth model that describes a growth of a plant in the target area depending on weather, fertilizers, soil conditions and/or irrigation,
- a toxicological model that predicts toxicological effects of the product on human health and/or non-target organisms in the target area and/or surroundings of the target area,
- an exposure and risk assessment model that estimates human and/or environmental exposure to the product and associated risks,
- a residue and/or metabolism model that predicts formation and behaviour of residues of the product in crops and/or soil in the target area and/or the environment,
- a population model that determines a probability that a non-target organism is occurring in the target area and/or the vicinity of the target area.

8. The method of any one of claims 1 to 7, wherein the destination-specific product label (PL) comprises one or more of the following:
- information about when the product may be applied to the target area,
- information about when the product should preferably be applied to the target area,
- information about when the product should preferably not be applied to the target area,
- information about when the product should not and/or must not be applied to the target area,
- information on a time interval that should or must be observed between two consecutive applications of the product in the target area,
- information on a quantity of the product that may be applied in the target area,
- information on which quantities may be applied in which sub-areas of the target area,
- information on how the product must, must not, can, should and/or should not be applied,
- information on where the product must, must not, can and/or should be applied,
- information on a distance that must be maintained from the target area's boundaries,
- information on circumstances under which the product should not or must not be applied,
- information about an application method and/or application parameters to be observed when applying the product to the target area,
- information about when the destination-specific product label (PL) was generated,
- information about who initiated the generation of the destination-specific product label (PL),
- information about which computer program was used to generate the destination-specific product label (PL),
- information about which model or models were used to generate the destination-specific product label (PL),
- information on when the destination-specific product label (PL) is valid until,
- a certificate stating that the destination-specific product label (PL) contains an official authorization for the use of the product in the target area,
- a digital signature that can be used to check whether the destination-specific product label (PL) is genuine and/or until when the destination-specific product label (PL) is valid,
- machine instructions for controlling and/or directing an application device (AD),
- a digital map of the target area,
- a digital map that indicates quantities of the product that should/could be applied in the target area and/or in individual sub-areas of the target areas.

9. The method of any one of claims 1 to 8, further comprising one or more of the following:
• transmitting the destination-specific product label (PL) to an application device (AD) for controlling and/or directing the application device (AD) when applying the product in the target area,
• monitoring the application of the product in the target area by an application device (AD),
• checking whether the product is and/or was applied to the target area in accordance with the information in the destination-specific label (PL).
• receiving information on the use of the product in the target area from an application device (AD),
• transmitting the information on the use of the product in the target area to a regulatory authority (RA).

## Patentansprüche

1. Computerimplementiertes Verfahren zur Erzeugung eines zielspezifischen Produktetiketts (PL), wobei das Verfahren umfasst:
• Empfangen von Zielinformationen über ein Zielgebiet, in dem ein Produkt ausgebracht werden soll, wobei das Produkt ein Pflanzenschutzmittel ist oder umfasst,
• Empfangen von Produktinformationen über das im Zielgebiet auszubringende Produkt,
• Erzeugen eines zielspezifischen Produktetiketts (PL) für die Ausbringung des Produkts im Zielgebiet auf der Grundlage der empfangenen Informationen,
• Ausgeben des zielspezifischen Produktetiketts (PL),
**dadurch gekennzeichnet, dass** das Produkt einer behördlichen Zulassung unterliegt und nur nach Erteilung der behördlichen Zulassung und solange die Zulassung besteht und unter den Bedingungen und in dem Zielgebiet, für die die Zulassung erteilt wurde, verwendet werden darf,
wobei das zielspezifische Produktetikett (PL) die behördliche Zulassung für die Ausbringung des Produkts im Zielgebiet ist oder umfasst, wobei die behördliche Zulassung nur für die Ausbringung des Produkts im Zielgebiet gilt,
wobei das Zielgebiet ein landwirtschaftliches Feld für den Anbau von Nutzpflanzen ist oder umfasst,
wobei die Zielinformationen das Zielgebiet spezifizieren und/oder eine im Zielgebiet vorhandene Biomassemenge spezifizieren und/oder topographische und/oder topologische Informationen über das Zielgebiet umfassen und/oder Informationen über den Boden im Zielgebiet umfassen, wobei die Informationen über den Boden eines oder mehrere der folgenden umfassen: Bodenart, Bodentextur, Boden-pH, Gehalt an organischer Substanz, Nährstoffgehalte, Kationenaustauschkapazität, Bodenstruktur, Wasserspeicherkapazität, Bodenentwässerungseigenschaften, Bodentiefe, Bodentemperatur, Bodenfeuchtigkeit, Art und/oder Menge lebender Organismen im Boden,
wobei zumindest ein Teil der Zielinformationen mittels Fernerkundung gewonnen wird und wobei zumindest ein Teil der Zielinformationen räumlich aufgelöste Informationen sind,
wobei das zielspezifische Produktetikett (PL) ein digitales Produktetikett ist.

2. Verfahren nach Anspruch 1, wobei das Empfangen von Produktinformationen über das im Zielgebiet auszubringende Produkt umfasst:
- Empfangen von Informationen über eine Nutzpflanze und/oder einen Schadorganismus,
- Auswählen eines oder mehrerer Produkte auf der Grundlage der Informationen über die Nutzpflanze und/oder den Schadorganismus,
- Abrufen von Produktinformationen der ein oder mehreren ausgewählten Produkte aus einer oder mehreren Datenbanken,
- Erzeugen eines zielspezifischen Produktetiketts (PL) für jedes der ausgewählten Produkte,
- Ausgeben jedes zielspezifischen Produktetiketts (PL).

3. Verfahren nach Anspruch 1, wobei zumindest ein Teil der Informationen über den Boden im Zielgebiet von einem oder mehreren im Zielgebiet befindlichen Sensoren (S1, ... Sm) gewonnen wird.

4. Verfahren nach einem der Ansprüche 1 bis 3, ferner umfassend:
• Empfangen von Umgebungsinformationen, wobei die Umgebungsinformationen die Umgebung des Zielgebiets spezifizieren und/oder charakterisieren,
wobei die Umgebungsinformationen angeben:
- ob sich ein Naturschutzgebiet und/oder ein Grundwasserschutzgebiet in der Nähe des Zielgebiets befindet und/oder wie weit das Zielgebiet vom Naturschutzgebiet und/oder Grundwasserschutzgebiet entfernt ist, und/oder
- welche Vegetation in der Nähe des Zielgebiets vorhanden ist, und/oder
- ob sich Straßen und/oder bewohnte Gebiete in der Nähe des Zielgebiets befinden und/oder wie weit das Zielgebiet von Straßen und/oder bewohnten Gebieten entfernt ist, und/oder
- welche Bodenarten an das Zielgebiet angrenzen und/oder welche Eigenschaften der angrenzende Boden hat, und/oder
- ob Tiere in der Nähe des Zielgebiets gehalten werden und/oder vorhanden sind und/oder in welcher Entfernung vom Zielgebiet und/oder welche Art von Tieren vorhanden ist, und/oder
- Mindest-, Höchst- und/oder bevorzugte Schwellenwerte, Grenzen, Beschränkungen und/oder Auflagen, die von einer Regulierungsbehörde (RA) zum Schutz von Menschen, Tieren und/oder Nichtzielorganismen im Zielgebiet und/oder der Umwelt verlangt werden, und/oder
- ob und/oder welche Mengen eines oder mehrerer Produkte auf benachbarte Flächen ausgebracht wurden und/oder welche landwirtschaftlichen Praktiken auf benachbarten Flächen angewendet werden, und/oder
- Topologie, Topographie, Wetter, Klima und/oder Vegetation der Umgebung des Zielgebiets.

5. Verfahren nach einem der Ansprüche 1 bis 4, ferner umfassend:
• Empfangen von Nutzpflanzeninformationen, wobei die Nutzpflanzeninformationen eine Nutzpflanze spezifizieren und/oder charakterisieren, die im Zielgebiet angebaut wurde, wird und/oder werden soll,
wobei die Nutzpflanzeninformationen umfassen:
- Informationen über die Nutzpflanzenart und/oder die Nutzpflanzensorte, und/oder
- Informationen darüber, ob und/oder wie die Nutzpflanze gentechnisch verändert wurde, und/oder
- Informationen über ein Entwicklungsstadium der Nutzpflanze und/oder wann sie gepflanzt oder gesät wurde und/oder ob und/oder wann sie gedüngt wurde und/oder ob und/oder wann sie bewässert wurde, und/oder
- Informationen darüber, ob die Nutzpflanze bereits mit einem oder mehreren Produkten behandelt wurde und/oder mit welchem/welchen Produkt(en) die Nutzpflanze behandelt wurde und/oder wann sie mit einem oder mehreren Produkten behandelt wurde und/oder wie sie mit einem oder mehreren Produkt(en) behandelt wurde, und/oder
- Informationen darüber, welche Nutzpflanzen zuvor im Zielgebiet angebaut wurden, und/oder
- Informationen über die im Zielgebiet vorhandene Menge an Nutzpflanzenbiomasse.

6. Verfahren nach einem der Ansprüche 1 bis 5, ferner umfassend:
• Empfangen von Ausbringungsinformationen, wobei die Ausbringungsinformationen eine oder mehrere beabsichtigte Ausbringungen des Produkts im Zielgebiet spezifizieren und/oder charakterisieren,
wobei die Ausbringungsinformationen
- angeben, welche Ausbringungsmittel verfügbar sind und/oder wie sie eingesetzt werden können, und/oder
- einen Zeitraum in der Zukunft spezifizieren, für den eine Ausbringung des Produkts im Zielgebiet geplant ist, und/oder
- angeben, wo das Produkt ausgebracht werden soll.

7. Verfahren nach einem der Ansprüche 1 bis 6, wobei das Erzeugen eines zielspezifischen Produktetiketts (PL) für die Ausbringung des Produkts im Zielgebiet auf der Grundlage der empfangenen Informationen umfasst:
- Bereitstellen eines Modells,
- Eingeben der empfangenen Informationen in das Modell,
- Empfangen einer Ausgabe vom Modell,
- Ableiten von Anweisungen, Empfehlungen und/oder Verboten für die Ausbringung des Produkts im Zielgebiet aus der Ausgabe des Modells,
- Aufnehmen der Anweisungen, Empfehlungen und/oder Verbote in das zielspezifische Produktetikett (PL),
wobei das Modell eines oder mehrere der folgenden ist oder umfasst:
- ein Abbaumodell, das beschreibt, wie schnell ein im Zielgebiet ausgebrachtes Produkt und/oder ein oder mehrere Inhaltsstoffe des Produkts abgebaut werden/wird,
- ein Verteilungsmodell, das eine Verteilung des Produkts während und/oder nach der Ausbringung des Produkts im Zielgebiet beschreibt,
- ein Umweltverbleibsmodell, das ein Verhalten des Produkts im Zielgebiet simuliert, einschließlich Prozessen wie Abbau, Versickerung, Verflüchtigung und/oder Abfluss,
- ein ökologisches Risikobewertungsmodell, das eine potenzielle Auswirkung des Produkts auf Nichtzielorganismen, Ökosysteme und/oder die biologische Vielfalt im Zielgebiet bewertet,
- ein Schädlings- und/oder Krankheitsmodell, das eine Wahrscheinlichkeit bestimmt, dass das Zielgebiet und/oder die im Zielgebiet angebauten Nutzpflanzen von einem oder mehreren Schadorganismen befallen sind,
- ein Pflanzenwachstumsmodell, das ein Wachstum einer Pflanze im Zielgebiet in Abhängigkeit von Wetter, Düngemitteln, Bodenbedingungen und/oder Bewässerung beschreibt,
- ein toxikologisches Modell, das toxikologische Wirkungen des Produkts auf die menschliche Gesundheit und/oder Nichtzielorganismen im Zielgebiet und/oder in der Umgebung des Zielgebiets vorhersagt,
- ein Expositions- und Risikobewertungsmodell, das die Exposition von Mensch und/oder Umwelt gegenüber dem Produkt und die damit verbundenen Risiken abschätzt,
- ein Rückstands- und/oder Metabolismusmodell, das die Bildung und das Verhalten von Rückständen des Produkts in Nutzpflanzen und/oder im Boden im Zielgebiet und/oder in der Umwelt vorhersagt,
- ein Populationsmodell, das eine Wahrscheinlichkeit bestimmt, dass ein Nichtzielorganismus im Zielgebiet und/oder in der Nähe des Zielgebiets vorkommt.

8. Verfahren nach einem der Ansprüche 1 bis 7, wobei das zielspezifische Produktetikett (PL) eines oder mehrere der folgenden umfasst:
- Informationen darüber, wann das Produkt im Zielgebiet ausgebracht werden darf,
- Informationen darüber, wann das Produkt vorzugsweise im Zielgebiet ausgebracht werden sollte,
- Informationen darüber, wann das Produkt vorzugsweise nicht im Zielgebiet ausgebracht werden sollte,
- Informationen darüber, wann das Produkt nicht im Zielgebiet ausgebracht werden sollte und/oder darf,
- Informationen über ein Zeitintervall, das zwischen zwei aufeinanderfolgenden Ausbringungen des Produkts im Zielgebiet eingehalten werden sollte oder muss,
- Informationen über eine Menge des Produkts, die im Zielgebiet ausgebracht werden darf,
- Informationen darüber, welche Mengen in welchen Teilbereichen des Zielgebiets ausgebracht werden dürfen,
- Informationen darüber, wie das Produkt ausgebracht werden muss, nicht ausgebracht werden darf, ausgebracht werden kann, ausgebracht werden sollte und/oder nicht ausgebracht werden sollte,
- Informationen darüber, wo das Produkt ausgebracht werden muss, nicht ausgebracht werden darf, ausgebracht werden kann und/oder ausgebracht werden sollte,
- Informationen über einen Abstand, der von den Grenzen des Zielgebiets eingehalten werden muss,
- Informationen über Umstände, unter denen das Produkt nicht ausgebracht werden sollte oder darf,
- Informationen über ein Ausbringungsverfahren und/oder Ausbringungsparameter, die bei der Ausbringung des Produkts im Zielgebiet zu beachten sind,
- Informationen darüber, wann das zielspezifische Produktetikett (PL) erzeugt wurde,
- Informationen darüber, wer die Erzeugung des zielspezifischen Produktetiketts (PL) veranlasst hat,
- Informationen darüber, welches Computerprogramm zur Erzeugung des zielspezifischen Produktetiketts (PL) verwendet wurde,
- Informationen darüber, welches Modell oder welche Modelle zur Erzeugung des zielspezifischen Produktetiketts (PL) verwendet wurden,
- Informationen darüber, bis wann das zielspezifische Produktetikett (PL) gültig ist,
- ein Zertifikat, das besagt, dass das zielspezifische Produktetikett (PL) eine amtliche Genehmigung für die Verwendung des Produkts im Zielgebiet enthält,
- eine digitale Signatur, mit der überprüft werden kann, ob das zielspezifische Produktetikett (PL) echt ist und/oder bis wann das zielspezifische Produktetikett (PL) gültig ist,
- Maschinenanweisungen zur Steuerung und/oder Lenkung einer Ausbringungsvorrichtung (AD),
- eine digitale Karte des Zielgebiets,
- eine digitale Karte, die Mengen des Produkts angibt, die im Zielgebiet und/oder in einzelnen Teilbereichen des Zielgebiets ausgebracht werden sollten/könnten.

9. Verfahren nach einem der Ansprüche 1 bis 8, ferner umfassend eines oder mehrere der folgenden:
• Übertragen des zielspezifischen Produktetiketts (PL) an eine Ausbringungsvorrichtung (AD) zur Steuerung und/oder Lenkung der Ausbringungsvorrichtung (AD) bei der Ausbringung des Produkts im Zielgebiet,
• Überwachen der Ausbringung des Produkts im Zielgebiet durch eine Ausbringungsvorrichtung (AD),
• Überprüfen, ob das Produkt im Zielgebiet gemäß den Informationen im zielspezifischen Etikett (PL) ausgebracht wird und/oder wurde,
• Empfangen von Informationen über die Verwendung des Produkts im Zielgebiet von einer Ausbringungsvorrichtung (AD),
• Übertragen der Informationen über die Verwendung des Produkts im Zielgebiet an eine Regulierungsbehörde (RA).

## Revendications

1. Procédé mis en œuvre par ordinateur de génération d'une étiquette de produit (PL) spécifique à une destination, le procédé comprenant :
• la réception d'informations de destination concernant une zone cible dans laquelle un produit doit être appliqué, dans lequel le produit est ou comprend un produit phytopharmaceutique,
• la réception d'informations de produit concernant le produit à appliquer dans la zone cible,
• la génération d'une étiquette de produit (PL) spécifique à la destination pour l'application du produit dans la zone cible sur la base des informations reçues,
• la sortie de l'étiquette de produit (PL) spécifique à la destination,
**caractérisé en ce que** le produit est soumis à une autorisation réglementaire et ne peut être utilisé qu'après l'octroi de l'autorisation réglementaire et aussi longtemps que l'autorisation existe et dans les conditions et dans la zone cible pour lesquelles l'autorisation a été accordée,
dans lequel l'étiquette de produit (PL) spécifique à la destination est ou comprend l'autorisation réglementaire pour l'application du produit dans la zone cible, dans lequel l'autorisation réglementaire ne s'applique qu'à l'application du produit dans la zone cible,
dans lequel la zone cible est ou comprend un champ agricole pour la culture de plantes cultivées,
dans lequel les informations de destination spécifient la zone cible, et/ou spécifient une quantité de biomasse présente dans la zone cible, et/ou comprennent des informations topographiques et/ou topologiques concernant la zone cible, et/ou comprennent des informations sur le sol dans la zone cible, les informations sur le sol comprenant un ou plusieurs des éléments suivants : type de sol, texture du sol, pH du sol, teneur en matière organique, niveaux de nutriments, capacité d'échange cationique, structure du sol, capacité de rétention d'eau, caractéristiques de drainage du sol, profondeur du sol, température du sol, humidité du sol, type et/ou quantité d'organismes vivants dans le sol,
dans lequel au moins une partie des informations de destination est obtenue par télédétection, et dans lequel au moins une partie des informations de destination est une information à résolution spatiale,
dans lequel l'étiquette de produit (PL) spécifique à la destination est une étiquette de produit numérique.

2. Procédé selon la revendication 1, dans lequel la réception d'informations de produit concernant le produit à appliquer dans la zone cible comprend :
- la réception d'informations concernant une plante cultivée et/ou un organisme nuisible,
- la sélection d'un ou de plusieurs produits sur la base des informations concernant la plante cultivée et/ou l'organisme nuisible,
- la récupération d'informations de produit des un ou plusieurs produits sélectionnés à partir d'une ou de plusieurs bases de données,
- la génération d'une étiquette de produit (PL) spécifique à la destination pour chacun des produits sélectionnés,
- la sortie de chaque étiquette de produit (PL) spécifique à la destination.

3. Procédé selon la revendication 1, dans lequel au moins une partie des informations sur le sol dans la zone cible est obtenue à partir d'un ou de plusieurs capteurs (S1, ... Sm) situés dans la zone cible.

4. Procédé selon l'une quelconque des revendications 1 à 3, comprenant en outre :
• la réception d'informations environnementales, dans lequel les informations environnementales spécifient et/ou caractérisent l'environnement de la zone cible,
dans lequel les informations environnementales indiquent :
- si une réserve naturelle et/ou une zone de protection des eaux souterraines se trouve à proximité de la zone cible et/ou à quelle distance la zone cible se trouve de la réserve naturelle et/ou de la zone de protection des eaux souterraines, et/ou
- quelle végétation est présente à proximité de la zone cible, et/ou
- si des routes et/ou des zones habitées se trouvent à proximité de la zone cible et/ou à quelle distance la zone cible se trouve des routes et/ou des zones habitées, et/ou
- quels types de sol sont adjacents à la zone cible et/ou quelles propriétés le sol adjacent possède, et/ou
- si des animaux sont élevés et/ou présents à proximité de la zone cible et/ou à quelle distance de la zone cible et/ou quel type d'animaux est présent, et/ou
- les seuils, limites, limitations et/ou restrictions minimaux, maximaux et/ou préférés exigés par une autorité de réglementation (RA) pour protéger les êtres humains, les animaux et/ou les organismes non ciblés dans la zone cible et/ou l'environnement, et/ou
- si et/ou quelles quantités d'un ou de plusieurs produits ont été appliquées sur des zones voisines et/ou les pratiques agricoles utilisées dans les zones voisines, et/ou
- la topologie, la topographie, les conditions météorologiques, le climat et/ou la végétation de l'environnement de la zone cible.

5. Procédé selon l'une quelconque des revendications 1 à 4, comprenant en outre :
• la réception d'informations sur les cultures, dans lequel les informations sur les cultures spécifient et/ou caractérisent une plante cultivée qui a été, est et/ou sera cultivée dans la zone cible,
dans lequel les informations sur les cultures comprennent :
- des informations sur l'espèce cultivée et/ou la variété cultivée, et/ou
- des informations sur le fait que la plante cultivée a été génétiquement modifiée et/ou de quelle manière, et/ou
- des informations sur un stade de développement de la plante cultivée et/ou quand elle a été plantée ou semée et/ou si elle a été fertilisée et/ou quand et/ou si elle a été irriguée et/ou quand, et/ou
- des informations sur le fait que la plante cultivée a déjà été traitée avec un ou plusieurs produits et/ou avec quel(s) produit(s) la plante cultivée a été traitée et/ou quand elle a été traitée avec un ou plusieurs produits et/ou comment elle a été traitée avec un ou plusieurs produit(s), et/ou
- des informations sur les cultures qui ont été précédemment cultivées dans la zone cible, et/ou
- des informations sur la quantité de biomasse végétale présente dans la zone cible.

6. Procédé selon l'une quelconque des revendications 1 à 5, comprenant en outre :
• la réception d'informations d'application, dans lequel les informations d'application spécifient et/ou caractérisent une ou plusieurs applications prévues du produit dans la zone cible,
dans lequel les informations d'application
- indiquent quels moyens d'application sont disponibles et/ou comment ils peuvent être utilisés, et/ou
- spécifient une période dans le futur pour laquelle une application du produit dans la zone cible est prévue, et/ou
- indiquent où le produit est destiné à être appliqué.

7. Procédé selon l'une quelconque des revendications 1 à 6, dans lequel la génération d'une étiquette de produit (PL) spécifique à la destination pour l'application du produit dans la zone cible sur la base des informations reçues comprend :
- la fourniture d'un modèle,
- l'introduction des informations reçues dans le modèle,
- la réception d'une sortie du modèle,
- la dérivation d'instructions, de recommandations et/ou d'interdictions pour l'application du produit dans la zone cible à partir de la sortie du modèle,
- l'inclusion des instructions, recommandations et/ou interdictions dans l'étiquette de produit (PL) spécifique à la destination,
dans lequel le modèle est ou comprend un ou plusieurs des éléments suivants :
- un modèle de dégradation qui décrit la vitesse à laquelle un produit et/ou un ou plusieurs ingrédients du produit appliqué(s) dans la zone cible se dégrade(nt),
- un modèle de distribution qui décrit une distribution du produit pendant et/ou après l'application du produit dans la zone cible,
- un modèle de devenir environnemental qui simule un comportement du produit dans la zone cible, y compris des processus tels que la dégradation, le lessivage, la volatilisation et/ou le ruissellement,
- un modèle d'évaluation des risques écologiques qui évalue un impact potentiel du produit sur les organismes non ciblés, les écosystèmes et/ou la biodiversité dans la zone cible,
- un modèle de ravageurs et/ou de maladies qui détermine une probabilité que la zone cible et/ou les cultures cultivées dans la zone cible soient infestées par un ou plusieurs organismes nuisibles,
- un modèle de croissance des plantes qui décrit une croissance d'une plante dans la zone cible en fonction des conditions météorologiques, des engrais, des conditions du sol et/ou de l'irrigation,
- un modèle toxicologique qui prédit les effets toxicologiques du produit sur la santé humaine et/ou les organismes non ciblés dans la zone cible et/ou l'environnement de la zone cible,
- un modèle d'évaluation de l'exposition et des risques qui estime l'exposition humaine et/ou environnementale au produit et les risques associés,
- un modèle de résidus et/ou de métabolisme qui prédit la formation et le comportement des résidus du produit dans les cultures et/ou le sol dans la zone cible et/ou l'environnement,
- un modèle de population qui détermine une probabilité qu'un organisme non ciblé se trouve dans la zone cible et/ou à proximité de la zone cible.

8. Procédé selon l'une quelconque des revendications 1 à 7, dans lequel l'étiquette de produit (PL) spécifique à la destination comprend un ou plusieurs des éléments suivants :
- des informations sur le moment où le produit peut être appliqué dans la zone cible,
- des informations sur le moment où le produit devrait de préférence être appliqué dans la zone cible,
- des informations sur le moment où le produit ne devrait de préférence pas être appliqué dans la zone cible,
- des informations sur le moment où le produit ne devrait pas et/ou ne doit pas être appliqué dans la zone cible,
- des informations sur un intervalle de temps qui devrait ou doit être respecté entre deux applications consécutives du produit dans la zone cible,
- des informations sur une quantité du produit qui peut être appliquée dans la zone cible,
- des informations sur les quantités qui peuvent être appliquées dans quelles sous-zones de la zone cible,
- des informations sur la manière dont le produit doit, ne doit pas, peut, devrait et/ou ne devrait pas être appliqué,
- des informations sur l'endroit où le produit doit, ne doit pas, peut et/ou devrait être appliqué,
- des informations sur une distance qui doit être maintenue par rapport aux limites de la zone cible,
- des informations sur les circonstances dans lesquelles le produit ne devrait pas ou ne doit pas être appliqué,
- des informations sur une méthode d'application et/ou des paramètres d'application à respecter lors de l'application du produit dans la zone cible,
- des informations sur le moment où l'étiquette de produit (PL) spécifique à la destination a été générée,
- des informations sur la personne qui a initié la génération de l'étiquette de produit (PL) spécifique à la destination,
- des informations sur le programme informatique utilisé pour générer l'étiquette de produit (PL) spécifique à la destination,
- des informations sur le modèle ou les modèles utilisés pour générer l'étiquette de produit (PL) spécifique à la destination,
- des informations sur la date de validité de l'étiquette de produit (PL) spécifique à la destination,
- un certificat attestant que l'étiquette de produit (PL) spécifique à la destination contient une autorisation officielle pour l'utilisation du produit dans la zone cible,
- une signature numérique permettant de vérifier si l'étiquette de produit (PL) spécifique à la destination est authentique et/ou jusqu'à quand l'étiquette de produit (PL) spécifique à la destination est valide,
- des instructions machine pour le contrôle et/ou le guidage d'un dispositif d'application (AD),
- une carte numérique de la zone cible,
- une carte numérique indiquant les quantités du produit qui devraient/pourraient être appliquées dans la zone cible et/ou dans des sous-zones individuelles de la zone cible.

9. Procédé selon l'une quelconque des revendications 1 à 8, comprenant en outre un ou plusieurs des éléments suivants :
• la transmission de l'étiquette de produit (PL) spécifique à la destination à un dispositif d'application (AD) pour le contrôle et/ou le guidage du dispositif d'application (AD) lors de l'application du produit dans la zone cible,
• la surveillance de l'application du produit dans la zone cible par un dispositif d'application (AD),
• la vérification que le produit est et/ou a été appliqué dans la zone cible conformément aux informations contenues dans l'étiquette spécifique à la destination (PL),
• la réception d'informations sur l'utilisation du produit dans la zone cible provenant d'un dispositif d'application (AD),
• la transmission des informations sur l'utilisation du produit dans la zone cible à une autorité de réglementation (RA).
